# EUROPEAN PATENT APPLICATION

(11) **EP 4 485 210 A1**
(43) Date of publication of application: **01.01.2025**
(21) Application number: 23209784.0
(22) Date of filing: 14.11.2023
(51) Int. Cl.: G06F 11/20, G06F 9/50, G06F 11/22, G06F 11/263, G06F 11/30, G06F 11/34

(54) **METHOD AND APPARATUS TO PROACTIVELY SCREEN HARDWARE ERRORS OF A COMPUTER PROCESSING SYSTEM**

(30) Priority: 30.06.2023 US 202318217245
(71) Applicant: INTEL Corporation, Santa Clara, CA 95054 (US)
(72) Inventor: Sakthivelu, Sridharan, DuPont WA, 98327 (US); Balasubramanian, Kaushik, Beaverton OR, 97007 (US); Surya, Krishna, Portland OR, 97229 (US)
(74) Representative: Samson & Partner Patentanwälte mbB

(57) **Abstract**

Methods and apparatus to implement proactive hardware error screening are disclosed. In one embodiment, a computer processing system includes a plurality of computational units to execute tasks for one or more applications; a plurality of sensors collects measurement data of the plurality of computational units, to collect measurement data of the plurality of computational units; a data structure indicating hardware health statuses of the plurality of computational units determined based on the measurement data is stored in a storage; and the plurality of computational units is scheduled to perform task execution on the computer processing system for the one or more applications based on the hardware health statuses of the plurality of computational units indicated in the data structure, wherein a first computational unit is excluded from the task execution when a corresponding first hardware health status of the first computational unit indicates an impending hardware failure.

## Description

### TECHNICAL FIELD

Embodiments of the disclosure relate to the field of computing; and more specifically, the embodiments are related to apparatus and method to proactively screen hardware errors of a computer processing system.

### BACKGROUND ART

Modern processing units are collectively referred to as xPUs, and they refer to processing units such as central processing units (CPUs), graphics processing units (GPUs), tensor processing units (TPUs), or infrastructure processing units (IPUs). The xPUs are experiencing a dramatic increase in complexity as a direct result of increasing core counts, specialized hardware accelerator units, increasing cache sizes, reduced transistor/line sizes, reduced power (Vmin), increased frequency (Fmax), and ever-increasing performance features. These increasing complexities result in increased defects per million (DPM) at time 0 (defects at the time of manufacturing, which is also referred to as T0 errors) and during usage due to aging.

Testing coverage is critical in xPU manufacturing for lower predictable DPMs. Higher coverage is achieved through longer and exhaustive combinations to get functional, logical, and performance coverage. In addition, testing data such as Silent Data Errors (SDE), T0 errors, usage related errors (early life/aging) are hard to emulate/detect/reproduce in manufacturing. The parts shipped to system manufacturers go through further test screenings to test integrity of the parts that make up a complete system. These tests are critical to capture SDE related errors to eliminate them from production where impact of failure could be even higher.

Once a computing system enters operation, the system can experience early life failures and aging related failures such Electromigration, Time Dependent Dielectric Breakdown and cause non-SDE/SDE which is observable at high volume. To minimize this, the computing system needs to be constantly screened for failures. For example, a computational unit of the system may be taken offline from Operating System (OS) and/or application of the computing system to run screening tests, such offline screening is disruptive to OS/applications and reduces the quality-of-service (QoS) and availability of the computing system.

### BRIEF DESCRIPTION OF THE DRAWINGS

The disclosure may best be understood by referring to the following description and accompanying drawings that are used to show embodiments of the disclosure.
FIG. 1 shows an architecture to proactively screen hardware errors of a computer processing system per some embodiments.
FIG. 2 shows operations/entities to determine health status of computational units per some embodiments.
FIG. 3 illustrates a software hierarchy to proactively screen hardware errors of a computer processing system per some embodiments.
FIG. 4 illustrates the operation sequence for non-intrusive screening along with intrusive content interleaving per some embodiments.
FIG. 5 is a block diagram illustrating hardware failure screening in an in-order architecture core and a register renaming, out-of-order issue/execution architecture core to be included in a processor per some embodiments.
FIG. 6 illustrates the operation flow of implementing proactive hardware error screening per some embodiments.
FIG. 7 illustrates examples of execution unit(s) circuitry, such as execution unit(s) circuitry.
FIG. 8 illustrates an example of a computing system.
FIG. 9 illustrates a block diagram of an example processor and/or System on a Chip (SoC) that may have one or more cores and an integrated memory controller.
FIG. 10 is a block diagram illustrating a computing system 1000 configured to implement one or more aspects of the examples described herein.
FIG. 11A illustrates examples of a parallel processor.
FIG. 11B illustrates examples of a block diagram of a partition unit.
FIG. 11C illustrates examples of a block diagram of a processing cluster within a parallel processing unit.
FIG. 11D illustrates examples of a graphics multiprocessor in which the graphics multiprocessor couples with the pipeline manager of the processing cluster.
FIGS. 12A-12C illustrate additional graphics multiprocessors, according to examples.
FIG. 13 shows a parallel compute system 1300, according to some examples.
FIGS. 14A-14B illustrate a hybrid logical/physical view of a disaggregated parallel processor, according to examples described herein.
FIGS. 15A-15B illustrate thread execution logic including an array of processing elements employed in a graphics processor core according to examples described herein.
FIG. 16 illustrates an additional execution unit, according to an example.
FIG. 17 is a block diagram of another example of a graphics processor.
FIG. 18 is a block diagram illustrating the use of a software instruction converter to convert binary instructions in a source ISA to binary instructions in a target ISA according to examples.
FIG. 19 is a block diagram illustrating an IP core development system 1900 that may be used to manufacture an integrated circuit to perform operations according to some examples.

### DETAILED DESCRIPTION

In the following description, numerous specific details are set forth. However, it is understood that embodiments of the disclosure may be practiced without these specific details. In other instances, well-known circuits, structures, and techniques have not been shown in detail in order not to obscure the understanding of this description.

Bracketed text and blocks with dashed borders (such as large dashes, small dashes, dot-dash, and dots) may be used to illustrate optional operations that add additional features to the embodiments of the disclosure. Such notation, however, should not be taken to mean that these are the only options or optional operations, and/or that blocks with solid borders are not optional in some embodiments of the disclosure.

References in the specification to "one embodiment," "an embodiment," "an example embodiment," etc. indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The terms "connected" means a direct electrical or magnetic connection between the things that are connected, without any intermediary devices, while the term "coupled" means either a direct electrical or magnetic connection between the things that are connected or an indirect connection through one or more passive or active intermediary devices. The term "circuit" means one or more passive and/or active components that are arranged to cooperate with one another to provide a desired function. A "set," as used herein, refers to any positive whole number of items including one item.

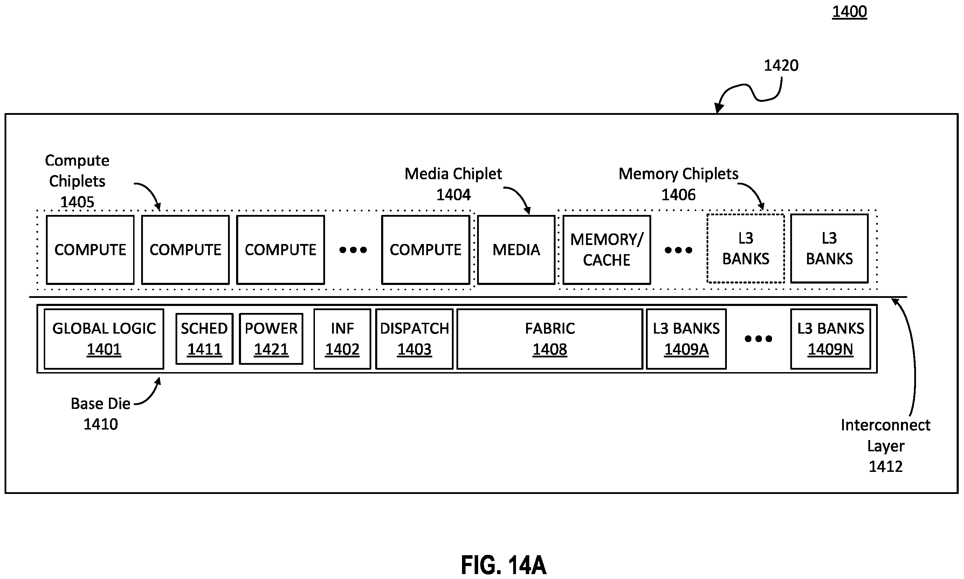

Embodiments herein describe computer processing systems in examples. A computer processing system includes one or more central processing units (CPUs), graphics processing units (GPUs), tensor processing units (TPUs), or infrastructure processing units (IPUs), each of which may include one or more cores. The computer processing system may be implemented in a System on Chip (SoC) integrated in an Integrated Circuit ("IC") die, or chip in some embodiments. In alternative embodiments (see e.g., Figs. 14A-B), the computer processing system may be disaggregated with various dies, tiles and/or chiplets physically and electrically coupled together by a package structure.

### Architecture to Screen Hardware Failures

Currently processors (xPUs) are typically tested for hardware failures offline. The offline testing is performed using Error Screening Content (ESC) with exhaustive functional and part level defect coverage stress and screen the silicon logic and compare the test results with expected results. A static ESC recipe in a static configuration is used. The ESC is run and re-run in a High-Volume Manufacturing (HVM) operating environment, and the offline testing looks for errors to manifest in pre-determined time as per manufacturing loop/time budget constraints.

Such offline test is primarily used for HVM screening, and it removes computational units within the xPUs from being used by the Operating System (OS) and/or an application (consumer of the computational units). Such an intrusion may have Quality-of-Service (QoS) impact and affects customer satisfaction, not to mention the loss of use/revenue due to taking the computational units offline for screening.

Furthermore, the offline test is not suitable for continuous proactive hardware error screening. A workload can be long running (e.g., hours or even days) and moving the workload from a first computational unit to a second one to perform screening on the first one is cumbersome and inefficient. Additionally, the offline test does not afford fine-grained opportunistic screening (e.g., when the computational unit is running at capacity).

To test and guard against hardware failure, a set of on-die silicon methods has also been proposed. For example, dedicated test circuitry may be integrated directly onto the die itself. This allows for comprehensive testing of the die functionality and performance at the silicon level. Additionally, hardware screening techniques such as core lock step may be deployed at run time to ensure the reliability and fault tolerance of processors or processor cores. In core lock step, two or more processor cores receive the same inputs, execute the same instructions, and produce the same outputs. The outputs of each core are then compared to check for any discrepancies. If a discrepancy is detected, it indicates a potential error or fault in one of the cores.

Yet these hardware-based screening methods consume valuable silicon real-estate, which can be otherwise used for more performance and resulting in a reduction in performance/cost metric significantly.

Embodiments of the disclosure proactively screen for hardware errors and remove unhealthy computational units from resource pool through scheduling continuous screening to identify the unhealthy computational units. The proactive screening does not remove computational units from executing tasks of the OS/applications, thus is advantageous over the offline test.

Additionally, the proactive screening in the embodiments does not need to add dedicated hardware for testing, thus has lesser impact on the die itself and easier to implement than the on-die silicon methods.

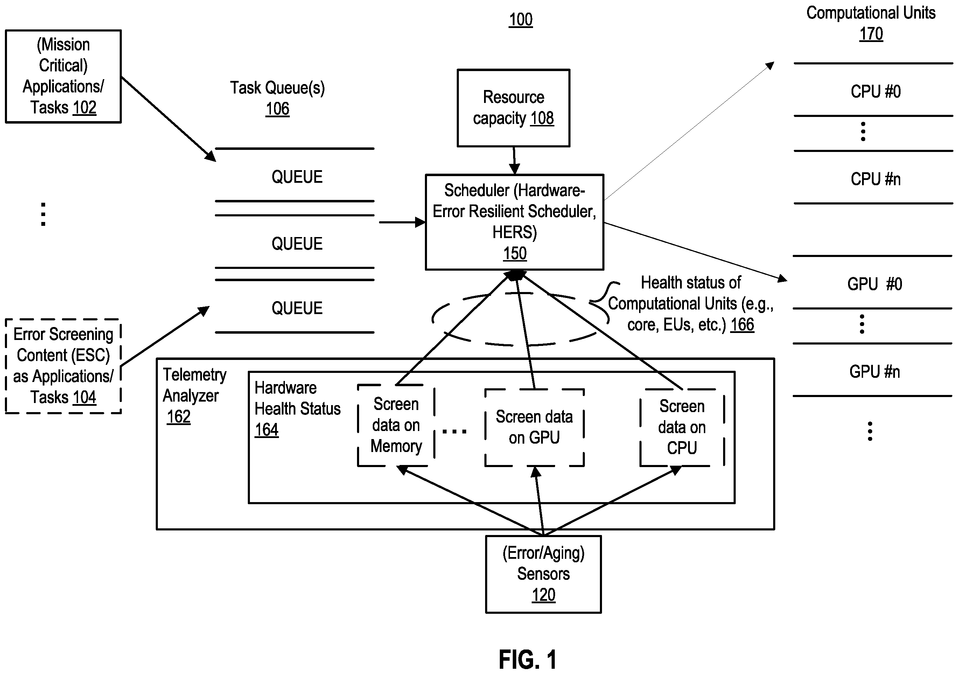

FIG. 1 shows an architecture to proactively screen hardware errors of a computer processing system per some embodiments. Architecture 100 receives applications or tasks to be performed for applications at reference 102. The tasks may be from the OS and internal operations of the system (e.g., Virtual machines, containers). Some or all of the applications/tasks 102 may be mission critical or time sensitive, and in which case they have stricter QoS requirements and are less tolerant to hardware failures, which would cause significant impact. The tasks are queued in one or more task queues 106, waiting to be scheduled for execution by a scheduler 150. Scheduler 150 may also be referred to as hardware-error resilient scheduler (HERS), indicating its feature of providing hardware error resilient scheduling. Note that the terms "task" and "workload" are used interchangeably herein.

Scheduler 150 is implemented as software module in some embodiments, and a hardware logic/circuit in alternative embodiments. Task scheduling in a computing processing system is typically based on resource capacity of computational units within, where resource capacity is based on the availability of the resources in the computational units, and new tasks are allocated with (1) resources that have not been allocated to existing tasks, or (2) resources that have been allocated but can be shared with the new tasks. Such task scheduling does not consider whether the computational units may suffer impending hardware failure that prevents the applications/tasks from being completed successfully. In contrast, scheduler 150 considers both resource capacity 108 and hardware health status of the computational units 166.

Scheduler 150 interacts with a telemetry analyzer 162 that determines and provides the health status of the computational units of the computer processing system at reference 166. Telemetry analyzer 162 collects and analyzes measurement data from sensors 120 coupled to the computational units to determine the hardware health status and store the health status to a storage at reference 164. While scheduler 150 and telemetry analyzer 162 are shown as separate entities, they may be integrated as a single software module or hardware logic/circuit in some embodiments.

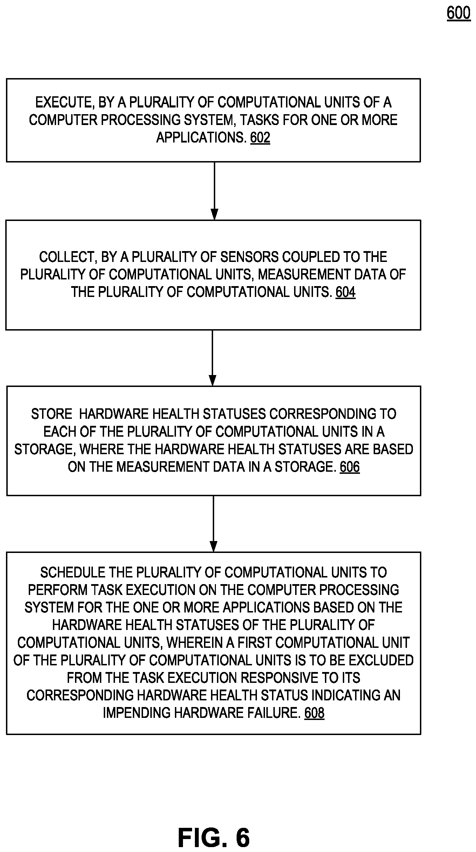

The health status of a computational unit indicates the health of the computational unit. A computational unit may be a hardware entity involved in executing a task in a computer processing system. For example, the hardware entity may be an xPU or xPU core, a memory system (e.g., caches/storage), a transport unit (e.g., Interconnect such as Peripheral Component Interconnect (PCI)), an Input/Out (I/O) device, a communication device, a control circuit (e.g., power/clock control). Additionally, a component within an xPU or xPU core may be referred to as a computational unit as well. Figure 6 shows some examples of such components. While resources in a computing processing system may also refer to more abstract/virtual units (e.g., bandwidth), a computational unit herein refers to a hardware entity in a computing processing system that may experience hardware failure.

Sensors 120 measure error and aging issues of a corresponding computational unit. These sensors measure and monitor the effects of hardware component aging (e.g., transistor aging) and potential errors that can occur over time on the processor. While these sensors may be added specifically to detect impending hardware failures, existing sensors may be repurposed to perform such detection. For example, existing sensors are already used to measure temperature, voltage, current, delay, power consumption, usage patterns, and other performance metrics of computational units, and they may be used to detect impending hardware failures.

Telemetry analyzer 162 analyzes measurement data collected from sensors 120 and builds the screen data of different computational units, including memory, xPUs, and other hardware entities (and/or components within these hardware entities). The screen data can include ongoing measurements, based on which telemetry analyzer 162 may determine the health status of computational units.

The health status of a computational unit may be in one of three categories: (1) healthy, where the computational unit operates normally without errors being detected; (2) failure, where the computational unit does not operate normally and cannot be allocated to be executed for application/tasks 102; and (3) available but deemed to have impending failure, where the computational unit is still functional but likely to incur failure soon.

More categories may be included to further specify the health status of a computation unit in some embodiments. For example, the determination of an impending failure may be mapped to a confidence level of such determination, an impending failure may be mapped to a severity of the failure and/or impact of the failure, and an impending failure may be mapped to the expected timeframe for the failure to occur.

All the health status information may be stored as hardware health status 164 in a storage. The information may be stored in a table, a map, a dictionary, a list, an array, a file, or another data structure, and the data structure may be saved in a database. The data structure may be indexed by identifiers (IDs) of computational units, and each entry in the data structure may include one or more of an identifier, a corresponding health status of the corresponding computation units, a confidence level of the health status determination, and/or severity/impact/ID of impending failure(s) in some embodiments.

Scheduler 150 schedules task execution by allocating computational units 170 for the applications/tasks 102. The computational units 170 are selected not only based on their resource capacity 108 but also the health status of the computational units at reference 166.

Since the health of the computational units is considered by scheduler 150, the scheduling can be done opportunistically to utilize the computational units that are healthy and reliable to complete the allocated tasks. The computation unit that is available but deemed to have impending failure may be excluded from being allocated to the task execution. Through scheduler 150 proactively filtering out computational units with impending failures, mission critical tasks would not suffer degraded performance. Scheduler 150 may allocate computational units based on the confidence level of health status determination, e.g., a computational unit deemed to have an impending failure with lower confidence may still be allocated for non-mission critical tasks while the ones with higher confidence may be excluded completely. Scheduler 150 may allocate computational units based on severity, impact, and timing of the impending failure. For example, a computational unit with a determined impending failure that is a low severity, a small impact, and later/less frequent occurring may still be allocated for task execution when the computer processing system has insufficient healthy computational units.

The scheduling based on the health status of the computational units is non-intrusive as the normal execution of applications/tasks 102 are not interrupted for hardware screening. The scheduling can also provide a better QoS for the normal execution, as a computational unit may be detected as having an impending failure, and applications/tasks 102 that are running on the computational unit may be migrated away to a healthy alternate computation unit.

In some embodiments, in addition to the applications/tasks 102, error screening content (SEC) may be included in the task queues 106 for scheduler 150 to allocate computational units. The injected SEC allows scheduler 150 to interleave execution of the ESC into the natural execution of OS and application tasks, without the need to fully offline the computational units.

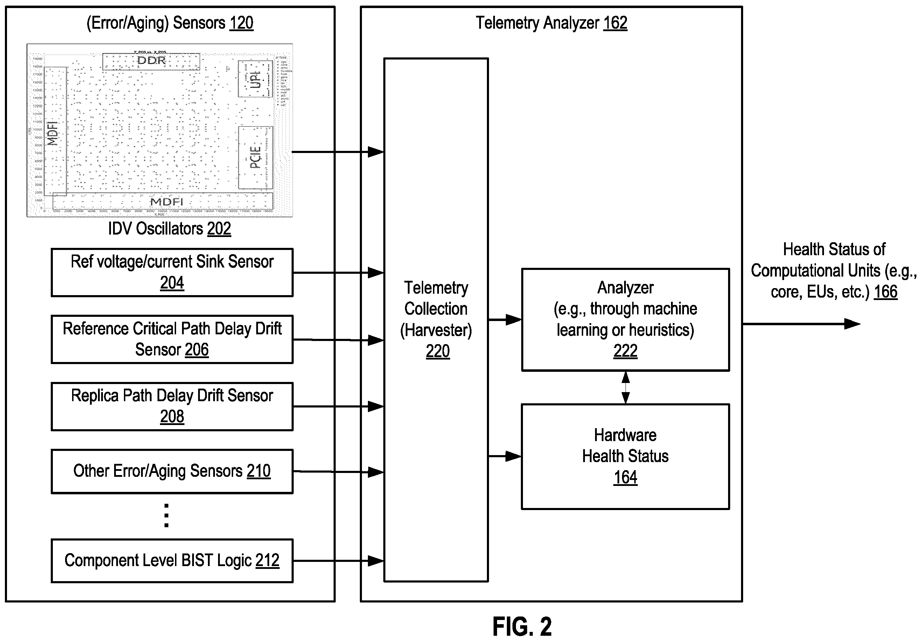

FIG. 2 shows operations/entities to determine health status of computational units per some embodiments. The sensors 120, telemetry analyzer 162 are shown in further details in this figure. A variety of sensors may be used to determine hardware and aging issues of corresponding computational units, including the ones shown in the figure.

For example, the sensors 120 may include an Intra-Die Variation (IDV) oscillator (also referred to as IDV probe or sensor) 202. IDV oscillator 202 may include groups of oscillators at distributed locations in a processor die and provide a stable and reliable timing reference for various digital circuits on the die by continuously monitoring and compensating for the variations that occur within a single die.

The sensors 120 may include a reference voltage/current sink sensor 204, which is used to monitor and control the voltage or current levels within the processor to maintain stable and accurate operation of the processor. The reference voltage/current sink sensor 204 may measure the actual voltage or current level in a particular domain and compare it to a predetermined reference value. If the measured value deviates from the reference, the sensor can initiate corrective actions to maintain the desired levels.

The sensors 120 may include a reference critical path delay drift sensor (RCPDDS) 206, which monitors the delay of the critical path in a processor. The critical path includes the longest path through the processor, and changes in its delay affect the overall performance of the processor. The RCPDDS 206 measures the delay and may adjust the processor's clock speed to compensate for the change in delay.

The sensors 120 may also include a replica path delay drift sensor (also known as replica delay line) 208, which measures the delay experienced by a signal as it propagates through a specific critical path within the processor and compensates for variations in path delays.

The sensors 120 may additionally include other error/aging sensors 210, which measure temperature, power consumption, usage patterns, and other performance metrics of computational units on the processor/die.

Furthermore, the sensors 120 may include Component level BIST (Built-In Self-Test) logic 212 that is integrated directly into the processor's individual components or modules. BIST allows for the self-testing of various functional units or components within the processor at the circuit or logic level. The BIST logic 212 operates during the manufacturing process or during system initialization and helps ensure that the processor's internal components meet the required specifications and performance standards.

Note that the described sensors 120 measure a variety of performance metrics on a variety of computational units on a processor/die. They have known functions and have been implemented on the processor/die already. Thus, no additional hardware is needed for measuring the health of the computational units to implement the proactive screening of hardware errors. The existing sensors may be repurposed to determine impending failures of the corresponding computational units.

The variety of sensors within the sensors 120 provides measurement data to telemetry analyzer 162, which includes a telemetry collection module 220 (sometimes referred to as telemetry harvester). The telemetry collection module 220 monitors and collects measurement data from the sensors 120. The collection may be performed periodically or triggered by events of the computer processing system, e.g., when scheduler 150 is required to allocate computational units for applications/tasks 102). The telemetry collection module 220 may poll the sensors 120 for measurement data, and the sensors 120 may also push the measurement data to the telemetry collection module 220, or the two entities may operate with the combination of both push and poll.

Analyzer 222 predicts whether a computational unit will incur an impending failure based on the measurement data collected by the telemetry collection module 220 and/or the historical hardware health statuses stored in the data structure discussed herein. The analyzer 222 may perform the prediction based on rules or heuristic algorithms to analyze various measurement data patterns that may precede a failure.

Additionally or alternatively, Analyzer 222 may predict an impending failure based on machine learning, where the machine learning takes in the measurement data collected by the telemetry collection module 220 and/or the historical hardware health statuses, and determines the impending failure using one or more machine learning models. The machine learning models may use supervised learning, unsupervised learning, semi-supervised learning, or other types of learning. It can use artificial neural networks, decision trees, support-vector machines, regression analysis, Bayesian networks, genetic algorithms, or any other framework. The machine learning models may be trained with the historical hardware health statuses and verified subsequent failures (or not) of the computational units to calibrate the machine learning model.

Once a prediction of the health status of a computational unit is made, the prediction may be saved in the hardware health status 164 to be compared to the later performance and analysis of the corresponding computational unit. Such data comparison may be used to adjust the rules, the heuristic algorithms, and/or the machine learning model.

### Software Hierarchy for Screening Hardware Failure

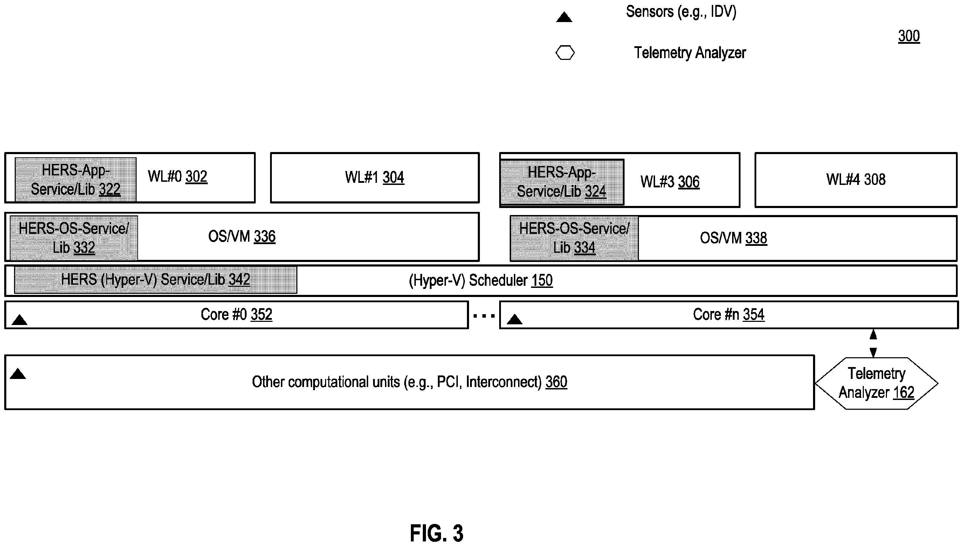

FIG. 3 illustrates a software hierarchy to proactively screen hardware errors of a computer processing system per some embodiments. The computer processing system 300 includes software and hardware, the latter of which includes computational units, for which the health statuses are collected and analyzed by telemetry analyzer 162 as discussed.

The computational units include cores #0 to n at references 352 to 354 where the cores may be cores of any xPUs discussed herein above or other processing units) and other computational units at reference 360, including one or more of memory systems, transport units, I/O devices, communication devices, and/or control circuits. Each of the computational units may be coupled to one or more sensors (e.g., sensors 120) to collect measurement data from the corresponding computational unit, and the measurement data is analyzed by a telemetry analyzer 162, the operations of which are discussed herein above.

Scheduler 150 is implemented as a software module in computer processing system 300. In some embodiments, scheduler 150 is a part of a software package (e.g., Windows Server Hyper-V) that provides virtualization capabilities for an OS system, and that allows users to create and manage virtual machines (VMs) on a single physical server, enabling the consolidation of multiple operating systems and applications.

Scheduler 150 allocates computational units for the natural execution of OS and application tasks. Additionally, error screening content (SEC) may be interleaved with the OS and application tasks, so computational units may execute the tasks while being screened for hardware failure, the concurrent execution (e.g., queueing and executing applications/tasks 102 and ESC 104) is advantageous over the prior approaches of taking the computational units offline for screening.

The interleaving of tasks may be achieved at several levels in software. Scheduler 150 may include a service or a library at reference 342 so that the SEC may be inserted in the scheduling directly in scheduler 150. Alternatively or additionally, the service or library may be included at the OS or VM level, where service or library 332 and 334 are included in OS/VM 336 and 338, respectively. Furthermore, such a service or library may be included as an application/task at the workload level, as shown as service or library 322 at workload 302. For example, the error screening content (ESC) as applications/tasks at reference 104 may be the service or library 322 at the application level, which is interleaved with workload #0 at reference 302. Note that scheduler 150 may schedule both interleaved workload (e.g., workload #0 and #3 at references 302 and 306, respectively) and non-overleaved workload (e.g., workload #1 and #4 at references 304 and 308) based on hardware health status provided by telemetry analyzer 162.

Scheduler 150 implemented as a software module offers advantages over prior approaches such as the on-die silicon methods, where dedicated hardware is used onto the diel itself. The scheduler 150 schedules computational resources based on measurement data collected from sensors 120 that are repurposed to determine hardware health status; no additional dedicated hardware is thus required to implement proactive screening in some embodiments. The hybrid approach of using software (scheduler as software) and hardware (sensors) can thus proactively screen hardware failures not only in processor manufacturing stage when new processors are built, but also in processor maintenance cycle when existing processors are tested to identify defect (since no new dedicated hardware is needed); and it may even be used in ongoing screening while the processors are executing OS/application tasks (since interleaving of tasks is supported).

The service or library needed for interleaving screening may be accessed through an Application Programming Interface (API), a Software Development Kit (SDK), Command Line Interface (CLI), or other means for interleaving SEC. The service or library may be created by a third party that does not produce the processor or the OS. For example, the vendor of the processor may provide the API, SDK, and/or CLI for the others to build the SEC or the application to interleave the SEC with the OS/application tasks. By doing so, the vendor provides the opportunities to an application provider or a cloud service provider to innovate continuous trickle screening the computational units assigned to a tenant of the cloud service provider.

The hardware error aware scheduler such as scheduler 150 may use the same computational unit for screening as well as the OS/application tasks, and such screening may be performed continuously while performing tasks for the OS/applications. The continuous screening accumulates health information of the computational units from the sensors coupled to the computational units, and the stored health information allows the scheduler to create the health trend of the computational units and adjust the scheduling accordingly. Additionally, the scheduler may schedule the hardware screening content on computational units that are running below capacity during execution for the OS/application tasks. By scheduling the hardware screening content on computational units that exhibit excess computation capacity with respect to current tasks, the scheduler thus endeavors to minimize impact on the normal execution in the computer processing system.

### Exemplary Hardware Failure Screening

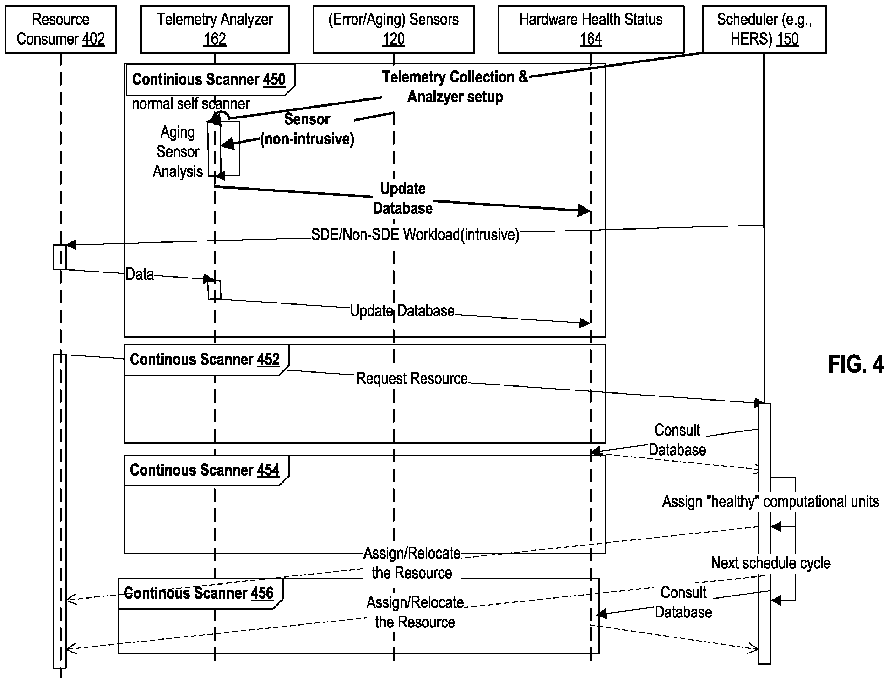

FIG. 4 illustrates the operation sequence for non-intrusive screening along with intrusive content interleaving per some embodiments. The figure includes a resource consumer 402, in addition to telemetry analyzer 162, sensors 120, and hardware health status 164, and scheduler 150 discussed herein above. Resource consumer 402 consumes resources of a computer processing system, including computational units within, and it may include applications/tasks 102, and/or error screening content (ESC) as applications/tasks at reference 104.

Scheduler 150 sets up telemetry analyzer 162, so that telemetry analyzer 162 may continuously scan sensors 120 for measurement data of the corresponding computational units, in the continuous scanner period 450. The measurement data allows telemetry analyzer 162 to determine the hardware health status of the computational units and update the database that stores the hardware health status. Such operations are non-intrusive and do not interrupt the execution of applications/tasks for resource consumer 402.

Scheduler 150 may schedule intrusive Silent Data Errors (SDE) and/or non-SDE workloads, along with the workload from resource consumer 402, on the computational units that need to be screened. The SDE/non-SDE workloads may be interleaved as applications/tasks at reference 104. The SDEs refer to errors that occur within a computer processing system that go unnoticed or undetected by the usual error-checking mechanisms. The SDEs primarily affect the data being processed or stored, and they can occur in various computational units. The selection of the SDE and/or non-SDE workloads may be based on many requirements including resource type, manufacturing information such as characteristics, physical location within wafer, die, and/or package.

Telemetry analyzer 162 collects and analyzes measurement data collected from executing the workloads (and applications/tasks 102 in some embodiments) to determine the health status of the computational units that are involved in the execution and update the database accordingly.

Once that scanner period 450 is completed, another scanner period 452 may start, where resources are requested to execute new workloads (e.g., new applications/tasks 102) for resource consumer 402. Scheduler 150 may schedule computational units to execute the new workloads. Scheduler 150 may assign healthy computational units, and/or relocate/migrate applications/tasks away from the computational units with impending failures. Telemetry analyzer 162 then collects and analyzes measurement data collected from executing the new workloads and updates the database using the updated health status obtained from telemetry analyzer 162. The scheduling process continues for the next schedule cycle.

### Exemplary Computational Units with Hardware Failure Screening

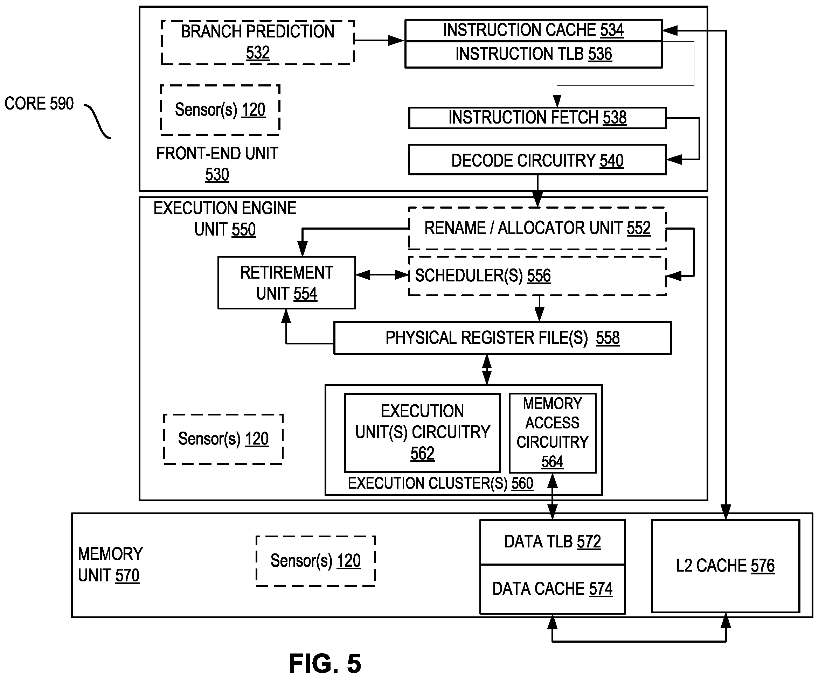

FIG. 5 is a block diagram illustrating hardware failure screening in an in-order architecture core and a register renaming, out-of-order issue/execution architecture core to be included in a processor per some embodiments. The figure shows a processor core 590 including front-end unit circuitry 530 coupled to execution engine unit circuitry 550, and both are coupled to memory unit circuitry 570. The core 590 may be a reduced instruction set architecture computing (RISC) core, a complex instruction set architecture computing (CISC) core, a very long instruction word (VLIW) core, or a hybrid or alternative core type. As yet another option, the core 590 may be a special-purpose core, such as, for example, a network or communication core, compression engine, coprocessor core, general purpose computing graphics processing unit (GPGPU) core, graphics core, or the like.

The front-end unit circuitry 530 may include branch prediction circuitry 532 coupled to instruction cache circuitry 534, which is coupled to an instruction translation lookaside buffer (TLB) 536, which is coupled to instruction fetch circuitry 538, which is coupled to decode circuitry 540. In some examples, the instruction cache circuitry 534 is included in the memory unit circuitry 570 rather than the front-end circuitry 530. The decode circuitry 540 (or decoder) may decode instructions, and generate as an output one or more micro-operations, micro-code entry points, microinstructions, other instructions, or other control signals, which are decoded from, or which otherwise reflect, or are derived from, the original instructions. Decode circuitry 540 may further include address generation unit (AGU, not shown) circuitry. In some examples, the AGU generates an LSU address using forwarded register ports, and may further perform branch forwarding (e.g., immediate offset branch forwarding, LR register branch forwarding, etc.). Decode circuitry 540 may be implemented using various different mechanisms. Examples of suitable mechanisms include, but are not limited to, look-up tables, hardware implementations, programmable logic arrays (PLAs), microcode read only memories (ROMs), etc. In some examples, the core 590 includes a microcode ROM (not shown) or other medium that stores microcode for certain macroinstructions (e.g., in decode circuitry 540 or otherwise within the front-end circuitry 530). In some examples, the decode circuitry 540 includes a micro-operation (micro-op) or operation cache (not shown) to hold/cache decoded operations, micro-tags, or micro-operations generated during the decode or other stages of the processor pipeline. The decode circuitry 540 may be coupled to rename/allocator unit circuitry 552 in the execution engine circuitry 550.

Execution engine circuitry 550 includes the rename/allocator unit circuitry 552 coupled to retirement unit circuitry 554 and a set of one or more scheduler(s) circuitry 556. The scheduler(s) circuitry 556 represents any number of different schedulers, including reservations stations, central instruction window, etc. In some examples, the scheduler(s) circuitry 556 can include arithmetic logic unit (ALU) scheduler/scheduling circuitry, ALU queues, address generation unit (AGU) scheduler/scheduling circuitry, AGU queues, etc. The scheduler(s) circuitry 556 is coupled to the physical register file(s) circuitry 558. Each of the physical register file(s) circuitry 558 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In some examples, the physical register file(s) circuitry 558 includes vector registers unit circuitry, writemask registers unit circuitry, and scalar register unit circuitry. These register units may provide architectural vector registers, vector mask registers, general-purpose registers, etc. The physical register file(s) circuitry 558 is coupled to the retirement unit circuitry 554 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 554 and the physical register file(s) circuitry 558 are coupled to the execution cluster(s) 560. The execution cluster(s) 560 includes a set of one or more execution unit(s) circuitry 562 and a set of one or more memory access circuitry 564. The execution unit(s) circuitry 562 may perform various arithmetic, logic, floating-point, or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 556, physical register file(s) circuitry 558, and execution cluster(s) 560 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 564). It should also be understood that where separate pipelines are used, one or more of these pipelines may be out-of-order issue/execution and the rest in-order.

In some examples, the execution engine unit circuitry 550 may perform load store unit (LSU) address/data pipelining to an Advanced Microcontroller Bus (AMB) interface (not shown), and address phase and writeback, data phase load, store, and branches.

The set of memory access circuitry 564 is coupled to the memory unit circuitry 570, which includes data TLB circuitry 572 coupled to data cache circuitry 574 coupled to level 2 (L2) cache circuitry 576. In some examples, the memory access circuitry 564 may include load unit circuitry, store address unit circuitry, and store data unit circuitry, each of which is coupled to the data TLB circuitry 572 in the memory unit circuitry 570. The instruction cache circuitry 534 is further coupled to the level 2 (L2) cache circuitry 576 in the memory unit circuitry 570. In some examples, the instruction cache 534 and the data cache 574 are combined into a single instruction and data cache (not shown) in L2 cache circuitry 576, level 3 (L3) cache circuitry (not shown), and/or main memory. The L2 cache circuitry 576 is coupled to one or more other levels of cache and eventually to a main memory.

The core 590 may support one or more instruction sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In some examples, core 590 includes logic to support a packed data instruction set architecture extension (e.g., AVX1, AVX2), thereby allowing the operations used by many multimedia applications to be performed using packed data.

The sensors 120 may be implemented in the front-end unit 530 or the execution unit 550. In some embodiments, one or more sensors may be implemented in the components of the front-end unit 530 or the execution unit 550. For example, a sensor may be implemented in each of decode circuitry 540, instruction fetch unit 538, and/or instruction cache 534.

Note that some of these components have sensors coupled to measure their performance data already and no additional sensors need to be implemented for the measurement. Additionally, scheduler 150 may be implemented as a software module, e.g., in an existing hardware/software module such as performance monitoring unit (PMU) of the computer processing system, so no dedicated new hardware is required to proactively screen hardware errors in some embodiments.

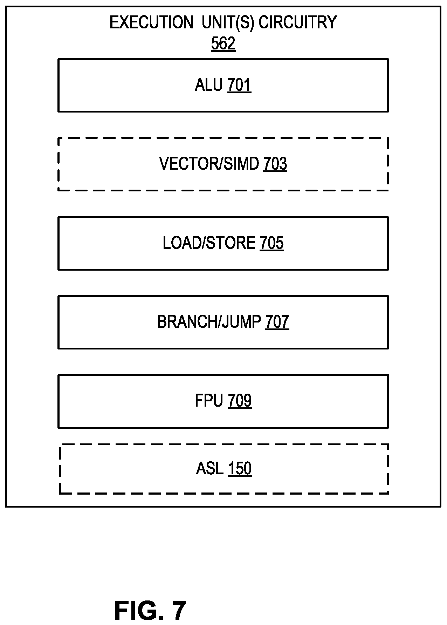

While processor core 590 is used as an example of a computer processing system in which proactive screening hardware failures may be implemented, other computer processing systems (e.g., ones implementing xPUs) may implement proactive hardware failure screening as well, and several exemplary computer processing systems and their computational units are shown below in Figures 7 to 17). In these computer processing systems, existing sensors may be repurposed, and existing hardware may implement the scheduler discussed herein or the scheduler may be implemented as a software module, thus proactive hardware failure screening may be implemented in these and other computer processing system without adding additional dedicated hardware.

### Operations in Some Embodiments

FIG. 6 illustrates the operation flow of implementing proactive hardware error screening per some embodiments. The operations in method 600 are performed in a computer processing system discussed herein.

At reference 602, a plurality of computational units of a computer processing system executes tasks for one or more applications. At reference 604, a plurality of sensors coupled to the plurality of computational units collects measurement data of the plurality of computational units, to collect measurement data of the plurality of computational units. At reference 606, hardware health statuses corresponding to each of the plurality of computational units are stored in a storage, where the hardware health statuses are based on the measurement data. At reference 608, the plurality of computational units is to be scheduled to perform task execution on the computer processing system for the one or more applications based on the hardware health statuses of the plurality of computational units, wherein a first computational unit of the plurality of computational units is to be excluded from the task execution responsive to its corresponding hardware health status indicating an impending hardware failure.

In some embodiments, error screening content is to be scheduled to be executed along with the tasks for the one or more applications to further determine the hardware health statuses of the plurality of computational units. In some embodiments, the error screening content includes a test package for silent data error (SDE). In some embodiments, the error screening content is to be executed as an application. In some embodiments, the error screening content is to be executed on a computational unit responsive to the computational unit running below capacity with the task execution for the one or more applications.

In some embodiments, the statuses of the plurality of computational units are to be updated based on the measurement data periodically obtained from the plurality of sensors.

In some embodiments, the plurality of sensors includes one or more of an Intra-Die Variation (IDV) oscillator, a voltage threshold draft sensor, a reference critical path delay draft sensor, a replication path timing/voltage draft sensor, or a component level Built-In Self Test (BIST) logic.

In some embodiments, the plurality of computational units includes one or more of the following entities in the computer processing system: a set of central processing unit (CPU) cores, a set of graphics processing unit (GPU) cores, a set of tensor processing units (TPUs), a set of intelligence processing units (IPU) cores, and a set of memory units. In some embodiments, the plurality of computational units includes one or more components of the sets of CPU cores, GPU cores, TPU cores, IPU cores, and memory units.

In some embodiments, machine learning or heuristic method is to be used to determine the statuses of the plurality of computational units.

In some embodiments, responsive to the hardware health status of a first set of computational units of no hardware health concerns and a hardware health status of a second set of computational units of no failure but an impending hardware failure, the second set of computational units are to be excluded from the task execution.

In some embodiments, tasks of a second computational unit of the plurality of computational units are to be moved to a third computational unit of the plurality of computational units responsive to a corresponding second hardware health status of the second computational unit of an impending hardware failure and a corresponding third hardware health status of the third computational unit of no hardware health concerns.

In some embodiments, the microinstruction waste rate of the single thread (e.g., wastage) is determined based on a ratio of allocated microoperations and retired microoperations.

In some embodiments, the cache missing rate of the single thread is determined based on a number of cache misses per a number of instructions.

In some embodiments, the method further comprises: removing the branch prediction throttling, once the thread execution of the single thread is no longer in a low confidence branch.

The proactively hardware errors screening disclosed herein may be used in a variety of computer processing system and execution circuitry processor architectures, where sensors are repurposed and scheduling is implemented to consider hardware health status, and few examples are provided herein below.

### Exemplary Execution Unit(s) Circuitry

FIG. 7 illustrates examples of execution unit(s) circuitry, such as execution unit(s) circuitry 562 of FIG. 5. As illustrated, execution unit(s) circuitry 562 may include one or more ALU circuits 701, optional vector/single instruction multiple data (SIMD) circuits 703, load/store circuits 705, branch/jump circuits 707, and/or Floating-point unit (FPU) circuits 709. ALU circuits 701 perform integer arithmetic and/or Boolean operations. Vector/SIMD circuits 703 perform vector/SIMD operations on packed data (such as SIMD/vector registers). Load/store circuits 705 execute load and store instructions to load data from memory into registers or store from registers to memory. Load/store circuits 705 may also generate addresses. Branch/jump circuits 707 cause a branch or jump to a memory address depending on the instruction. FPU circuits 709 perform floating-point arithmetic. The width of the execution unit(s) circuitry 562 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Systems

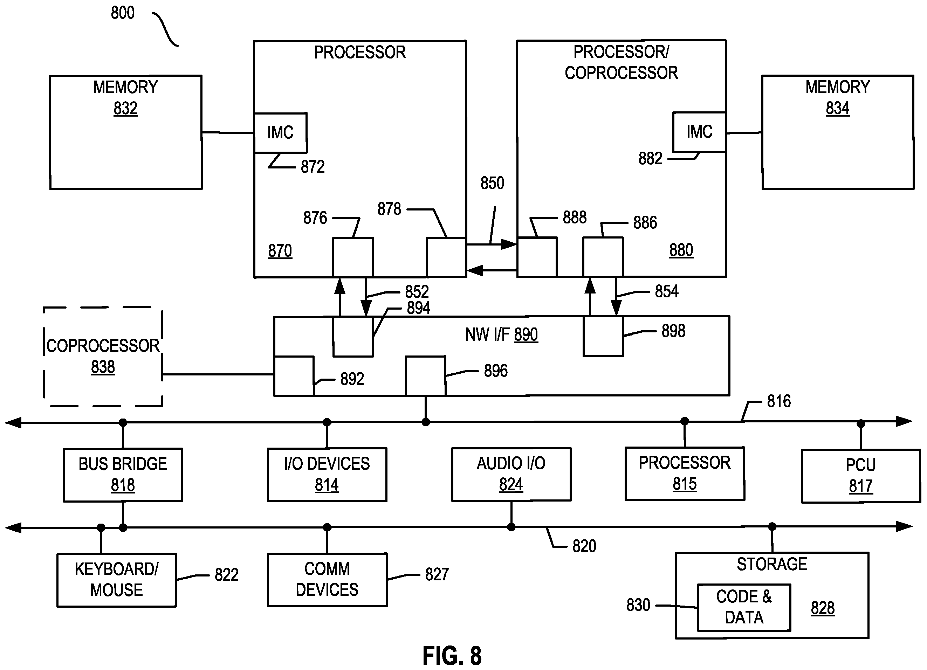

FIG. 8 illustrates an example computing system. Multiprocessor system 800 is an interfaced system and includes a plurality of processors or cores including a first processor 870 and a second processor 880 coupled via an interface 850 such as a point-to-point (P-P) interconnect, a fabric, and/or bus. In some examples, the first processor 870 and the second processor 880 are homogeneous. In some examples, first processor 870 and the second processor 880 are heterogenous. Though the example system 800 is shown to have two processors, the system may have three or more processors, or may be a single processor system. In some examples, the computing system is a system on a chip (SoC).

Processors 870 and 880 are shown including integrated memory controller (IMC) circuitry 872 and 882, respectively. Processor 870 also includes interface circuits 876 and 878; similarly, second processor 880 includes interface circuits 886 and 888. Processors 870, 880 may exchange information via the interface 850 using interface circuits 878, 888. IMCs 872 and 882 couple the processors 870, 880 to respective memories, namely a memory 832 and a memory 834, which may be portions of main memory locally attached to the respective processors.

Processors 870, 880 may each exchange information with a network interface (NW I/F) 890 via individual interfaces 852, 854 using interface circuits 876, 894, 886, 898. The network interface 890 (e.g., one or more of an interconnect, bus, and/or fabric, and in some examples is a chipset) may optionally exchange information with a coprocessor 838 via an interface circuit 892. In some examples, the coprocessor 838 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 870, 880 or outside of both processors, yet connected with the processors via an interface such as P-P interconnect, such that either or both processors' local cache information may be stored in the shared cache if a processor is placed into a low power mode.

Network interface 890 may be coupled to a first interface 816 via interface circuit 896. In some examples, first interface 816 may be an interface such as a Peripheral Component Interconnect (PCI) interconnect, a PCI Express interconnect or another I/O interconnect. In some examples, first interface 816 is coupled to a power control unit (PCU) 817, which may include circuitry, software, and/or firmware to perform power management operations with regard to the processors 870, 880 and/or co-processor 838. PCU 817 provides control information to a voltage regulator (not shown) to cause the voltage regulator to generate the appropriate regulated voltage. PCU 817 also provides control information to control the operating voltage generated. In various examples, PCU 817 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 817 is illustrated as being present as logic separate from the processor 870 and/or processor 880. In other cases, PCU 817 may execute on a given one or more of cores (not shown) of processor 870 or 880. In some cases, PCU 817 may be implemented as a microcontroller (dedicated or general-purpose) or other control logic configured to execute its own dedicated power management code, sometimes referred to as P-code. In yet other examples, power management operations to be performed by PCU 817 may be implemented externally to a processor, such as by way of a separate power management integrated circuit (PMIC) or another component external to the processor. In yet other examples, power management operations to be performed by PCU 817 may be implemented within BIOS or other system software.

Various I/O devices 814 may be coupled to first interface 816, along with a bus bridge 818 which couples first interface 816 to a second interface 820. In some examples, one or more additional processor(s) 815, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 816. In some examples, second interface 820 may be a low pin count (LPC) interface. Various devices may be coupled to second interface 820 including, for example, a keyboard and/or mouse 822, communication devices 827 and storage circuitry 828. Storage circuitry 828 may be one or more non-transitory machine-readable storage media as described below, such as a disk drive or other mass storage device which may include instructions/code and data 830 and may implement a storage to store instructions in some examples. Further, an audio I/O 824 may be coupled to second interface 820. Note that other architectures than the point-to-point architecture described above are possible. For example, instead of the point-to-point architecture, a system such as multiprocessor system 800 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

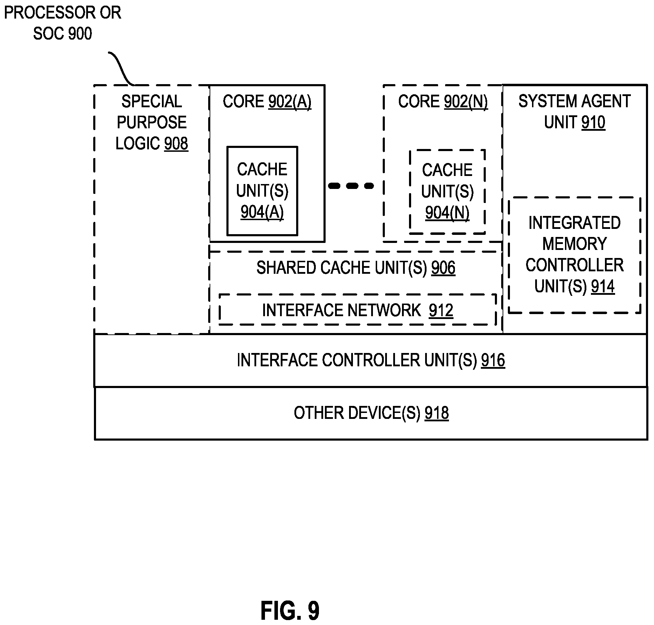

FIG. 9 illustrates a block diagram of an example processor and/or SoC 900 that may have one or more cores and an integrated memory controller. The solid lined boxes illustrate a processor 900 with a single core 902(A), system agent unit circuitry 910, and a set of one or more interface controller unit(s) circuitry 916, while the optional addition of the dashed lined boxes illustrates an alternative processor 900 with multiple cores 902(A)-(N), a set of one or more integrated memory controller unit(s) circuitry 914 in the system agent unit circuitry 910, and special purpose logic 908, as well as a set of one or more interface controller units circuitry 916. Note that the processor 900 may be one of the processors 870 or 880, or co-processor 838 or 815 of FIG. 8.

Thus, different implementations of the processor 900 may include: 1) a CPU with the special purpose logic 908 being integrated graphics and/or scientific (throughput) logic (which may include one or more cores, not shown), and the cores 902(A)-(N) being one or more general purpose cores (e.g., general purpose in-order cores, general purpose out-of-order cores, or a combination of the two); 2) a coprocessor with the cores 902(A)-(N) being a large number of special purpose cores intended primarily for graphics and/or scientific (throughput); and 3) a coprocessor with the cores 902(A)-(N) being a large number of general purpose in-order cores. Thus, the processor 900 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 900 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 904(A)-(N) within the cores 902(A)-(N), a set of one or more shared cache unit(s) circuitry 906, and external memory (not shown) coupled to the set of integrated memory controller unit(s) circuitry 914. The set of one or more shared cache unit(s) circuitry 906 may include one or more mid-level caches, such as level 2 (L2), level 3 (L3), level 4 (L4), or other levels of cache, such as a last level cache (LLC), and/or combinations thereof. While in some examples interface network circuitry 912 (e.g., a ring interconnect) interfaces the special purpose logic 908 (e.g., integrated graphics logic), the set of shared cache unit(s) circuitry 906, and the system agent unit circuitry 910, alternative examples use any number of well-known techniques for interfacing such units. In some examples, coherency is maintained between one or more of the shared cache unit(s) circuitry 906 and cores 902(A)-(N). In some examples, interface controller units circuitry 916 couple the cores 902 to one or more other devices 918 such as one or more I/O devices, storage, one or more communication devices (e.g., wireless networking, wired networking, etc.), etc.

In some examples, one or more of the cores 902(A)-(N) are capable of multi-threading. The system agent unit circuitry 910 includes those components coordinating and operating cores 902(A)-(N). The system agent unit circuitry 910 may include, for example, power control unit (PCU) circuitry and/or display unit circuitry (not shown). The PCU may be or may include logic and components needed for regulating the power state of the cores 902(A)-(N) and/or the special purpose logic 908 (e.g., integrated graphics logic). The display unit circuitry is for driving one or more externally connected displays.

The cores 902(A)-(N) may be homogenous in terms of instruction set architecture (ISA). Alternatively, the cores 902(A)-(N) may be heterogeneous in terms of ISA; that is, a subset of the cores 902(A)-(N) may be capable of executing an ISA, while other cores may be capable of executing only a subset of that ISA or another ISA.

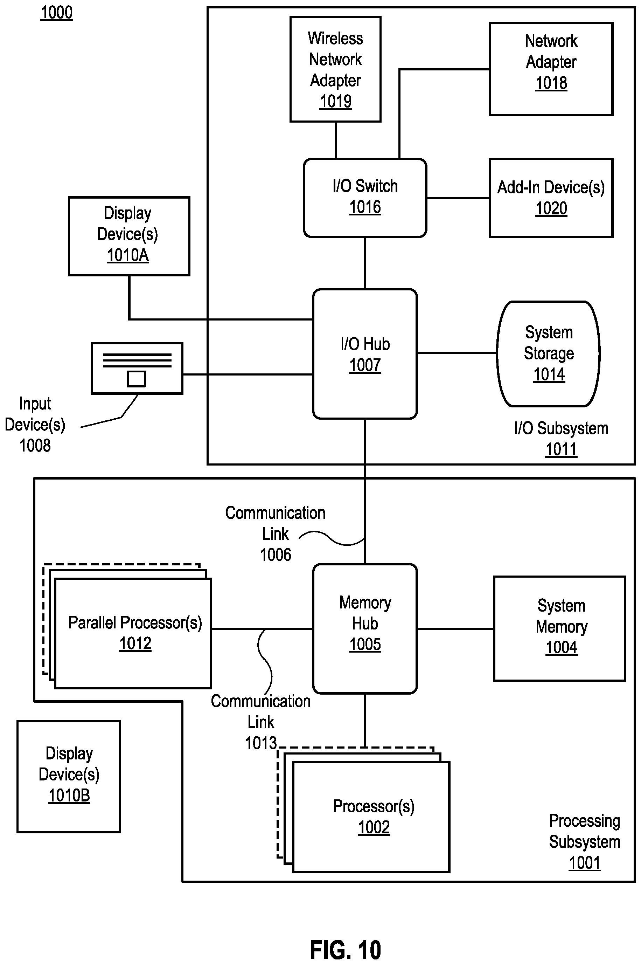

FIG. 10 is a block diagram illustrating a computing system 1000 configured to implement one or more aspects of the examples described herein. The computing system 1000 includes a processing subsystem 1001 having one or more processor(s) 1002 and a system memory 1004 communicating via an interconnection path that may include a memory hub 1005. The memory hub 1005 may be a separate component within a chipset component or may be integrated within the one or more processor(s) 1002. The memory hub 1005 couples with an I/O subsystem 1011 via a communication link 1006. The I/O subsystem 1011 includes an I/O hub 1007 that can enable the computing system 1000 to receive input from one or more input device(s) 1008. Additionally, the I/O hub 1007 can enable a display controller, which may be included in the one or more processor(s) 1002, to provide outputs to one or more display device(s) 1010A. In some examples the one or more display device(s) 1010A coupled with the I/O hub 1007 can include a local, internal, or embedded display device.

The processing subsystem 1001, for example, includes one or more parallel processor(s) 1012 coupled to memory hub 1005 via a bus or other communication link 1013. The communication link 1013 may be one of any number of standards-based communication link technologies or protocols, such as, but not limited to PCI Express, or may be a vendor specific communications interface or communications fabric. The one or more parallel processor(s) 1012 may form a computationally focused parallel or vector processing system that can include a large number of processing cores and/or processing clusters, such as a many integrated core (MIC) processor. For example, the one or more parallel processor(s) 1012 form a graphics processing subsystem that can output pixels to one of the one or more display device(s) 1010A coupled via the I/O hub 1007. The one or more parallel processor(s) 1012 can also include a display controller and display interface (not shown) to enable a direct connection to one or more display device(s) 1010B.

Within the I/O subsystem 1011, a system storage unit 1014 can connect to the I/O hub 1007 to provide a storage mechanism for the computing system 1000. An I/O switch 1016 can be used to provide an interface mechanism to enable connections between the I/O hub 1007 and other components, such as a network adapter 1018 and/or wireless network adapter 1019 that may be integrated into the platform, and various other devices that can be added via one or more add-in device(s) 1020. The add-in device(s) 1020 may also include, for example, one or more external graphics processor devices, graphics cards, and/or compute accelerators. The network adapter 1018 can be an Ethernet adapter or another wired network adapter. The wireless network adapter 1019 can include one or more of a Wi-Fi, Bluetooth, near field communication (NFC), or other network device that includes one or more wireless radios.

The computing system 1000 can include other components not explicitly shown, including USB or other port connections, optical storage drives, video capture devices, and the like, which may also be connected to the I/O hub 1007. Communication paths interconnecting the various components in FIG. 10 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link^{™} (CXL^{™}) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 1012 may incorporate circuitry optimized for graphics and video processing, including, for example, video output circuitry, and constitutes a graphics processing unit (GPU). Alternatively or additionally, the one or more parallel processor(s) 1012 can incorporate circuitry optimized for general purpose processing, while preserving the underlying computational architecture, described in greater detail herein. Components of the computing system 1000 may be integrated with one or more other system elements on a single integrated circuit. For example, the one or more parallel processor(s) 1012, memory hub 1005, processor(s) 1002, and I/O hub 1007 can be integrated into a system on chip (SoC) integrated circuit. Alternatively, the components of the computing system 1000 can be integrated into a single package to form a system in package (SIP) configuration. In some examples at least a portion of the components of the computing system 1000 can be integrated into a multi-chip module (MCM), which can be interconnected with other multi-chip modules into a modular computing system.

It will be appreciated that the computing system 1000 shown herein is illustrative and that variations and modifications are possible. The connection topology, including the number and arrangement of bridges, the number of processor(s) 1002, and the number of parallel processor(s) 1012, may be modified as desired. For instance, system memory 1004 can be connected to the processor(s) 1002 directly rather than through a bridge, while other devices communicate with system memory 1004 via the memory hub 1005 and the processor(s) 1002. In other alternative topologies, the parallel processor(s) 1012 are connected to the I/O hub 1007 or directly to one of the one or more processor(s) 1002, rather than to the memory hub 1005. In other examples, the I/O hub 1007 and memory hub 1005 may be integrated into a single chip. It is also possible that two or more sets of processor(s) 1002 are attached via multiple sockets, which can couple with two or more instances of the parallel processor(s) 1012.

Some of the particular components shown herein are optional and may not be included in all implementations of the computing system 1000. For example, any number of add-in cards or peripherals may be supported, or some components may be eliminated. Furthermore, some architectures may use different terminology for components similar to those illustrated in FIG. 10. For example, the memory hub 1005 may be referred to as a Northbridge in some architectures, while the I/O hub 1007 may be referred to as a Southbridge.

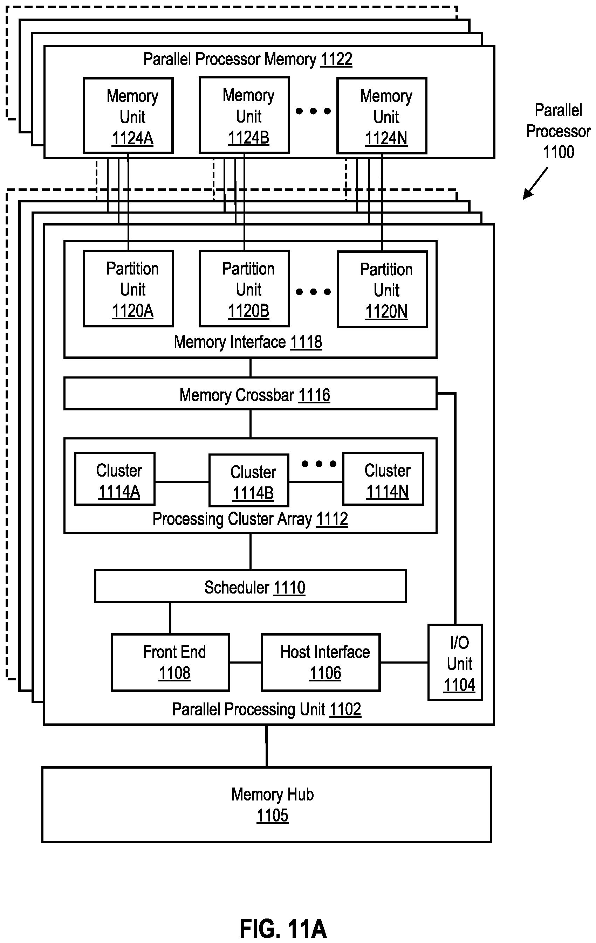

FIG. 11A illustrates examples of a parallel processor 1100. The parallel processor 1100 may be a GPU, GPGPU or the like as described herein. The various components of the parallel processor 1100 may be implemented using one or more integrated circuit devices, such as programmable processors, application specific integrated circuits (ASICs), or field programmable gate arrays (FPGA). The illustrated parallel processor 1100 may be one or more of the parallel processor(s) 1012 shown in FIG. 10.

The parallel processor 1100 includes a parallel processing unit 1102. The parallel processing unit includes an I/O unit 1104 that enables communication with other devices, including other instances of the parallel processing unit 1102. The I/O unit 1104 may be directly connected to other devices. For instance, the I/O unit 1104 connects with other devices via the use of a hub or switch interface, such as memory hub 1005. The connections between the memory hub 1005 and the I/O unit 1104 form a communication link 1013. Within the parallel processing unit 1102, the I/O unit 1104 connects with a host interface 1106 and a memory crossbar 1116, where the host interface 1106 receives commands directed to performing processing operations and the memory crossbar 1116 receives commands directed to performing memory operations.

When the host interface 1106 receives a command buffer via the I/O unit 1104, the host interface 1106 can direct work operations to perform those commands to a front end 1108. In some examples the front end 1108 couples with a scheduler 1110, which is configured to distribute commands or other work items to a processing cluster array 1112. The scheduler 1110 ensures that the processing cluster array 1112 is properly configured and in a valid state before tasks are distributed to the processing clusters of the processing cluster array 1112. The scheduler 1110 may be implemented via firmware logic executing on a microcontroller. The microcontroller implemented scheduler 1110 is configurable to perform complex scheduling and work distribution operations at coarse and fine granularity, enabling rapid preemption and context switching of threads executing on the processing cluster array 1112. Preferably, the host software can prove workloads for scheduling on the processing cluster array 1112 via one of multiple graphics processing doorbells. In other examples, polling for new workloads or interrupts can be used to identify or indicate availability of work to perform. The workloads can then be automatically distributed across the processing cluster array 1112 by the scheduler 1110 logic within the scheduler microcontroller.

The processing cluster array 1112 can include up to "N" processing clusters (e.g., cluster 1114A, cluster 1114B, through cluster 1114N). Each cluster 1114A-1114N of the processing cluster array 1112 can execute a large number of concurrent threads. The scheduler 1110 can allocate work to the clusters 1114A-1114N of the processing cluster array 1112 using various scheduling and/or work distribution algorithms, which may vary depending on the workload arising for each type of program or computation. The scheduling can be handled dynamically by the scheduler 1110 or can be assisted in part by compiler logic during compilation of program logic configured for execution by the processing cluster array 1112. Optionally, different clusters 1114A-1114N of the processing cluster array 1112 can be allocated for processing different types of programs or for performing different types of computations.

The processing cluster array 1112 can be configured to perform various types of parallel processing operations. For example, the processing cluster array 1112 is configured to perform general-purpose parallel compute operations. For example, the processing cluster array 1112 can include logic to execute processing tasks including filtering of video and/or audio data, performing modeling operations, including physics operations, and performing data transformations.

The processing cluster array 1112 is configured to perform parallel graphics processing operations. In such examples in which the parallel processor 1100 is configured to perform graphics processing operations, the processing cluster array 1112 can include additional logic to support the execution of such graphics processing operations, including, but not limited to texture sampling logic to perform texture operations, as well as tessellation logic and other vertex processing logic. Additionally, the processing cluster array 1112 can be configured to execute graphics processing related shader programs such as, but not limited to vertex shaders, tessellation shaders, geometry shaders, and pixel shaders. The parallel processing unit 1102 can transfer data from system memory via the I/O unit 1104 for processing. During processing the transferred data can be stored to on-chip memory (e.g., parallel processor memory 1122) during processing, then written back to system memory.

In examples in which the parallel processing unit 1102 is used to perform graphics processing, the scheduler 1110 may be configured to divide the processing workload into approximately equal sized tasks, to better enable distribution of the graphics processing operations to multiple clusters 1114A-1114N of the processing cluster array 1112. In some of these examples, portions of the processing cluster array 1112 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of the clusters 1114A-1114N may be stored in buffers to allow the intermediate data to be transmitted between clusters 1114A-1114N for further processing.

During operation, the processing cluster array 1112 can receive processing tasks to be executed via the scheduler 1110, which receives commands defining processing tasks from front end 1108. For graphics processing operations, processing tasks can include indices of data to be processed, e.g., surface (patch) data, primitive data, vertex data, and/or pixel data, as well as state parameters and commands defining how the data is to be processed (e.g., what program is to be executed). The scheduler 1110 may be configured to fetch the indices corresponding to the tasks or may receive the indices from the front end 1108. The front end 1108 can be configured to ensure the processing cluster array 1112 is configured to a valid state before the workload specified by incoming command buffers (e.g., batch-buffers, push buffers, etc.) is initiated.

Each of the one or more instances of the parallel processing unit 1102 can couple with parallel processor memory 1122. The parallel processor memory 1122 can be accessed via the memory crossbar 1116, which can receive memory requests from the processing cluster array 1112 as well as the I/O unit 1104. The memory crossbar 1116 can access the parallel processor memory 1122 via a memory interface 1118. The memory interface 1118 can include multiple partition units (e.g., partition unit 1120A, partition unit 1120B, through partition unit 1120N) that can each couple to a portion (e.g., memory unit) of parallel processor memory 1122. The number of partition units 1120A-1120N may be configured to be equal to the number of memory units, such that a first partition unit 1120A has a corresponding first memory unit 1124A, a second partition unit 1120B has a corresponding second memory unit 1124B, and an Nth partition unit 1120N has a corresponding Nth memory unit 1124N. In other examples, the number of partition units 1120A-1120N may not be equal to the number of memory devices.

The memory units 1124A-1124N can include various types of memory devices, including dynamic random-access memory (DRAM) or graphics random access memory, such as synchronous graphics random access memory (SGRAM), including graphics double data rate (GDDR) memory. Optionally, the memory units 1124A-1124N may also include 3D stacked memory, including but not limited to high bandwidth memory (HBM). Persons skilled in the art will appreciate that the specific implementation of the memory units 1124A-1124N can vary and can be selected from one of various conventional designs. Render targets, such as frame buffers or texture maps may be stored across the memory units 1124A-1124N, allowing partition units 1120A-1120N to write portions of each render target in parallel to efficiently use the available bandwidth of parallel processor memory 1122. In some examples, a local instance of the parallel processor memory 1122 may be excluded in favor of a unified memory design that utilizes system memory in conjunction with local cache memory.

Optionally, any one of the clusters 1114A-1114N of the processing cluster array 1112 has the ability to process data that will be written to any of the memory units 1 124A-1124N within parallel processor memory 1122. The memory crossbar 1116 can be configured to transfer the output of each cluster 1114A-1114N to any partition unit 1120A-1120N or to another cluster 1114A-1114N, which can perform additional processing operations on the output. Each cluster 1114A-1114N can communicate with the memory interface 1118 through the memory crossbar 1116 to read from or write to various external memory devices. In one of the examples with the memory crossbar 1116 the memory crossbar 1116 has a connection to the memory interface 1118 to communicate with the I/O unit 1104, as well as a connection to a local instance of the parallel processor memory 1122, enabling the processing units within the different processing clusters 1114A-1114N to communicate with system memory or other memory that is not local to the parallel processing unit 1102. Generally, the memory crossbar 1116 may, for example, be able to use virtual channels to separate traffic streams between the clusters 1114A-1114N and the partition units 1120A-1120N.

While a single instance of the parallel processing unit 1102 is illustrated within the parallel processor 1100, any number of instances of the parallel processing unit 1102 can be included. For example, multiple instances of the parallel processing unit 1102 can be provided on a single add-in card, or multiple add-in cards can be interconnected. For example, the parallel processor 1100 can be an add-in device, such as add-in device 1020 of FIG. 10, which may be a graphics card such as a discrete graphics card that includes one or more GPUs, one or more memory devices, and device-to-device or network or fabric interfaces. The different instances of the parallel processing unit 1102 can be configured to inter-operate even if the different instances have different numbers of processing cores, different amounts of local parallel processor memory, and/or other configuration differences. Optionally, some instances of the parallel processing unit 1102 can include higher precision floating point units relative to other instances. Systems incorporating one or more instances of the parallel processing unit 1102 or the parallel processor 1100 can be implemented in a variety of configurations and form factors, including but not limited to desktop, laptop, or handheld personal computers, servers, workstations, game consoles, and/or embedded systems. An orchestrator can form composite nodes for workload performance using one or more of: disaggregated processor resources, cache resources, memory resources, storage resources, and networking resources.

In some examples, the parallel processing unit 1102 can be partitioned into multiple instances. Those multiple instances can be configured to execute workloads associated with different clients in an isolated manner, enabling a pre-determined quality of service to be provided for each client. For example, each cluster 1114A-1114N can be compartmentalized and isolated from other clusters, allowing the processing cluster array 1112 to be divided into multiple compute partitions or instances. In such configuration, workloads that execute on an isolated partition are protected from faults or errors associated with a different workload that executes on a different partition. The partition units 1120A-1120N can be configured to enable a dedicated and/or isolated path to memory for the clusters 1114A-1114N associated with the respective compute partitions. This datapath isolation enables the compute resources within a partition can communicate with one or more assigned memory units 1124A-1124N without being subjected to inference by the activities of other partitions.

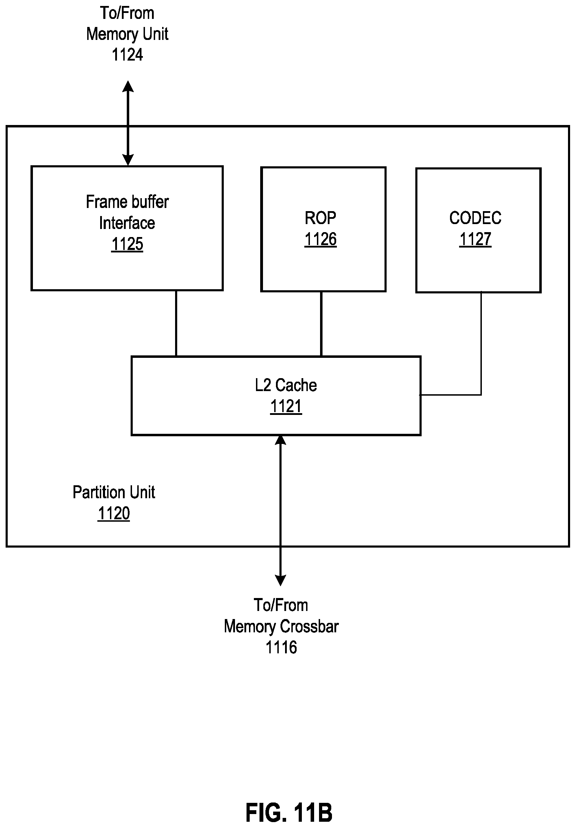

FIG. 11B is a block diagram of a partition unit 1120. The partition unit 1120 may be an instance of one of the partition units 1120A-1120N of FIG. 11A. As illustrated, the partition unit 1120 includes an L2 cache 1121, a frame buffer interface 1125, and a ROP 1126 (raster operations unit). The L2 cache 1121 is a read/write cache that is configured to perform load and store operations received from the memory crossbar 1116 and ROP 1126. Read misses and urgent write-back requests are output by L2 cache 1121 to frame buffer interface 1125 for processing. Updates can also be sent to the frame buffer via the frame buffer interface 1125 for processing. In some examples the frame buffer interface 1125 interfaces with one of the memory units in parallel processor memory, such as the memory units 1124A-1124N of FIG. 11A (e.g., within parallel processor memory 1122). The partition unit 1120 may additionally or alternatively also interface with one of the memory units in parallel processor memory via a memory controller (not shown).

In graphics applications, ROP 1126 is a processing unit that performs raster operations such as stencil, z test, blending, and the like. ROP 1126 then outputs processed graphics data that is stored in graphics memory. In some examples the ROP 1126 includes or couples with a CODEC 1127 that includes compression logic to compress depth or color data that is written to memory or the L2 cache 1121 and decompress depth or color data that is read from memory or the L2 cache 1121. Compression logic can be lossless compression logic that makes use of one or more of multiple compression algorithms. The type of compression that is performed by the CODEC 1127 can vary based on the statistical characteristics of the data to be compressed. For example, in some examples, delta color compression is performed on depth and color data on a per-tile basis. In some examples CODEC 1127 includes compression and decompression logic that can compress and decompress compute data associated with machine learning operations. CODEC 1127 can, for example, compress sparse matrix data for sparse machine learning operations. CODEC 1127 can also compress sparse matrix data that is encoded in a sparse matrix format (e.g., coordinate list encoding (COO), compressed sparse row (CSR), compress sparse column (CSC), etc.) to generate compressed and encoded sparse matrix data. The compressed and encoded sparse matrix data can be decompressed and/or decoded before being processed by processing elements or the processing elements can be configured to consume compressed, encoded, or compressed and encoded data for processing.

ROP 1126 may be included within each processing cluster (e.g., cluster 1114A-1114N of FIG. 11A) instead of within the partition unit 1120. In such example, read and write requests for pixel data are transmitted over the memory crossbar 1116 instead of pixel fragment data. The processed graphics data may be displayed on a display device, such as one of the one or more display device(s) 1010A-1010B of FIG. 10, routed for further processing by the processor(s) 1002, or routed for further processing by one of the processing entities within the parallel processor 1100 of FIG. 11A.

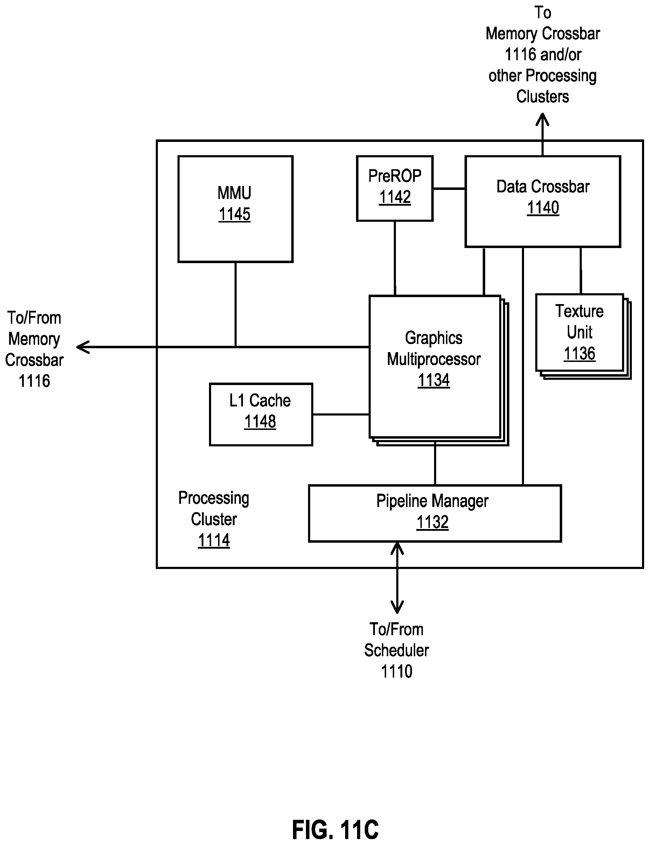

FIG. 11C is a block diagram of a processing cluster 1114 within a parallel processing unit. For example, the processing cluster is an instance of one of the processing clusters 1114A-1114N of FIG. 11A. The processing cluster 1114 can be configured to execute many threads in parallel, where the term "thread" refers to an instance of a particular program executing on a particular set of input data. Optionally, single-instruction, multiple-data (SIMD) instruction issue techniques may be used to support parallel execution of a large number of threads without providing multiple independent instruction units. Alternatively, single-instruction, multiple-thread (SIMT) techniques may be used to support parallel execution of a large number of generally synchronized threads, using a common instruction unit configured to issue instructions to a set of processing engines within each one of the processing clusters. Unlike a SIMD execution regime, where all processing engines typically execute identical instructions, SIMT execution allows different threads to more readily follow divergent execution paths through a given thread program. Persons skilled in the art will understand that a SIMD processing regime represents a functional subset of a SIMT processing regime.

Operation of the processing cluster 1114 can be controlled via a pipeline manager 1132 that distributes processing tasks to SIMT parallel processors. The pipeline manager 1132 receives instructions from the scheduler 1110 of FIG. 11A and manages execution of those instructions via a graphics multiprocessor 1134 and/or a texture unit 1136. The illustrated graphics multiprocessor 1134 is an exemplary instance of a SIMT parallel processor. However, various types of SIMT parallel processors of differing architectures may be included within the processing cluster 1114. One or more instances of the graphics multiprocessor 1134 can be included within a processing cluster 1114. The graphics multiprocessor 1134 can process data and a data crossbar 1140 can be used to distribute the processed data to one of multiple possible destinations, including other shader units. The pipeline manager 1132 can facilitate the distribution of processed data by specifying destinations for processed data to be distributed via the data crossbar 1140.

Each graphics multiprocessor 1134 within the processing cluster 1114 can include an identical set of functional execution logic (e.g., arithmetic logic units, load-store units, etc.). The functional execution logic can be configured in a pipelined manner in which new instructions can be issued before previous instructions are complete. The functional execution logic supports a variety of operations including integer and floating-point arithmetic, comparison operations, Boolean operations, bit-shifting, and computation of various algebraic functions. The same functional-unit hardware could be leveraged to perform different operations and any combination of functional units may be present.

The instructions transmitted to the processing cluster 1114 constitute a thread. A set of threads executing across the set of parallel processing engines is a thread group. A thread group executes the same program on different input data. Each thread within a thread group can be assigned to a different processing engine within a graphics multiprocessor 1134. A thread group may include fewer threads than the number of processing engines within the graphics multiprocessor 1134. When a thread group includes fewer threads than the number of processing engines, one or more of the processing engines may be idle during cycles in which that thread group is being processed. A thread group may also include more threads than the number of processing engines within the graphics multiprocessor 1134. When the thread group includes more threads than the number of processing engines within the graphics multiprocessor 1134, processing can be performed over consecutive clock cycles. Optionally, multiple thread groups can be executed concurrently on the graphics multiprocessor 1134.

The graphics multiprocessor 1134 may include an internal cache memory to perform load and store operations. Optionally, the graphics multiprocessor 1134 can forego an internal cache and use a cache memory (e.g., level 1 (L1) cache 1148) within the processing cluster 1114. Each graphics multiprocessor 1134 also has access to level 2 (L2) caches within the partition units (e.g., partition units 1120A-1120N of FIG. 11A) that are shared among all processing clusters 1114 and may be used to transfer data between threads. The graphics multiprocessor 1134 may also access off-chip global memory, which can include one or more of local parallel processor memory and/or system memory. Any memory external to the parallel processing unit 1102 may be used as global memory. Embodiments in which the processing cluster 1114 includes multiple instances of the graphics multiprocessor 1134 can share common instructions and data, which may be stored in the L1 cache 1148.

Each processing cluster 1114 may include an MMU 1145 (memory management unit) that is configured to map virtual addresses into physical addresses. In other examples, one or more instances of the MMU 1145 may reside within the memory interface 1118 of FIG. 11A. The MMU 1145 includes a set of page table entries (PTEs) used to map a virtual address to a physical address of a tile and optionally a cache line index. The MMU 1145 may include address translation lookaside buffers (TLB) or caches that may reside within the graphics multiprocessor 1134 or the L1 cache 1148 of processing cluster 1114. The physical address is processed to distribute surface data access locality to allow efficient request interleaving among partition units. The cache line index may be used to determine whether a request for a cache line is a hit or miss.

In graphics and computing applications, a processing cluster 1114 may be configured such that each graphics multiprocessor 1134 is coupled to a texture unit 1136 for performing texture mapping operations, e.g., determining texture sample positions, reading texture data, and filtering the texture data. Texture data is read from an internal texture L1 cache (not shown) or in some examples from the L1 cache within graphics multiprocessor 1134 and is fetched from an L2 cache, local parallel processor memory, or system memory, as needed. Each graphics multiprocessor 1134 outputs processed tasks to the data crossbar 1140 to provide the processed task to another processing cluster 1114 for further processing or to store the processed task in an L2 cache, local parallel processor memory, or system memory via the memory crossbar 1116. A preROP 1142 (pre-raster operations unit) is configured to receive data from graphics multiprocessor 1134, direct data to ROP units, which may be located with partition units as described herein (e.g., partition units 1120A-1120N of FIG. 11A). The preROP 1142 unit can perform optimizations for color blending, organize pixel color data, and perform address translations.

It will be appreciated that the core architecture described herein is illustrative and that variations and modifications are possible. Any number of processing units, e.g., graphics multiprocessor 1134, texture units 1136, preROPs 1142, etc., may be included within a processing cluster 1114. Further, while only one processing cluster 1114 is shown, a parallel processing unit as described herein may include any number of instances of the processing cluster 1114. Optionally, each processing cluster 1114 can be configured to operate independently of other processing clusters 1114 using separate and distinct processing units, L1 caches, L2 caches, etc.

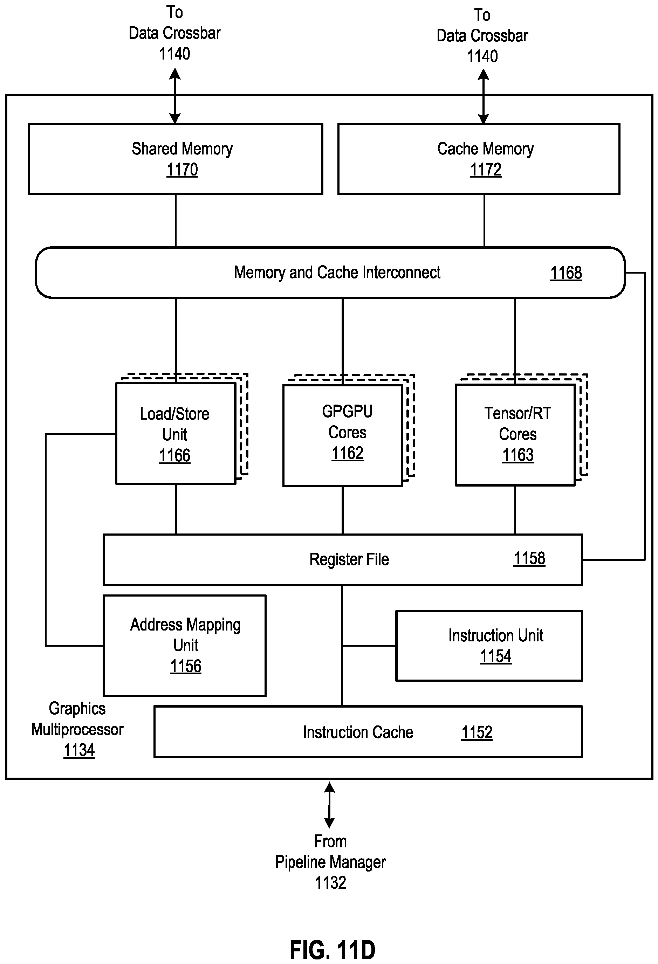

FIG. 11D shows an example of graphics multiprocessor 1134 in which the graphics multiprocessor 1134 couples with the pipeline manager 1132 of the processing cluster 1114. The graphics multiprocessor 1134 has an execution pipeline including but not limited to an instruction cache 1152, an instruction unit 1154, an address mapping unit 1156, a register file 1158, one or more general purpose graphics processing unit (GPGPU) cores 1162, and one or more load/store units 1166. The GPGPU cores 1162 and load/store units 1166 are coupled with cache memory 1172 and shared memory 1170 via a memory and cache interconnect 1168. The graphics multiprocessor 1134 may additionally include tensor and/or ray-tracing cores 1163 that include hardware logic to accelerate matrix and/or ray-tracing operations.

Instruction cache 1152 may receive a stream of instructions to execute from the pipeline manager 1132. The instructions are cached in instruction cache 1152 and dispatched for execution by the instruction unit 1154. The instruction unit 1154 can dispatch instructions as thread groups (e.g., warps), with each thread of the thread group assigned to a different execution unit within GPGPU core 1162. An instruction can access any of a local, shared, or global address space by specifying an address within a unified address space. The address mapping unit 1156 can be used to translate addresses in the unified address space into a distinct memory address that can be accessed by the load/store units 1166.

The register file 1158 provides a set of registers for the functional units of the graphics multiprocessor 1134. The register file 1158 provides temporary storage for operands connected to the data paths of the functional units (e.g., GPGPU cores 1162, load/store units 1166) of the graphics multiprocessor 1134. The register file 1158 may be divided between each of the functional units such that each functional unit is allocated a dedicated portion of the register file 1158. For example, the register file 1158 may be divided between the different warps being executed by the graphics multiprocessor 1134.

The GPGPU cores 1162 can each include floating point units (FPUs) and/or integer arithmetic logic units (ALUs) that are used to execute instructions of the graphics multiprocessor 1134. In some implementations, the GPGPU cores 1162 can include hardware logic that may otherwise reside within the tensor and/or ray-tracing cores 1163. The GPGPU cores 1162 can be similar in architecture or can differ in architecture. For example and in some examples, a first portion of the GPGPU cores 1162 include a single precision FPU and an integer ALU while a second portion of the GPGPU cores include a double precision FPU. Optionally, the FPUs can implement the IEEE 754-2008 standard for floating point arithmetic or enable variable precision floating point arithmetic. The graphics multiprocessor 1134 can additionally include one or more fixed function or special function units to perform specific functions such as copy rectangle or pixel blending operations. One or more of the GPGPU cores can also include fixed or special function logic.

The GPGPU cores 1162 may include SIMD logic capable of performing a single instruction on multiple sets of data. Optionally, GPGPU cores 1162 can physically execute SIMD4, SIMD8, and SIMD 16 instructions and logically execute SIMD1, SIMD2, and SIMD32 instructions. The SIMD instructions for the GPGPU cores can be generated at compile time by a shader compiler or automatically generated when executing programs written and compiled for single program multiple data (SPMD) or SIMT architectures. Multiple threads of a program configured for the SIMT execution model can be executed via a single SIMD instruction. For example and in some examples, eight SIMT threads that perform the same or similar operations can be executed in parallel via a single SIMD8 logic unit.

The memory and cache interconnect 1168 is an interconnect network that connects each of the functional units of the graphics multiprocessor 1134 to the register file 1158 and to the shared memory 1170. For example, the memory and cache interconnect 1168 is a crossbar interconnect that allows the load/store unit 1166 to implement load and store operations between the shared memory 1170 and the register file 1158. The register file 1158 can operate at the same frequency as the GPGPU cores 1162, thus data transfer between the GPGPU cores 1162 and the register file 1158 is very low latency. Shared memory 1170 can be used to enable communication between threads that execute on the functional units within the graphics multiprocessor 1134. The cache memory 1172 can be used as a data cache for example, to cache texture data communicated between the functional units and the texture unit 1136. The shared memory 1170 can also be used as a program managed cached. The shared memory 1170 and the cache memory 1172 can couple with the data crossbar 1140 to enable communication with other components of the processing cluster. Threads executing on the GPGPU cores 1162 can programmatically store data within the shared memory in addition to the automatically cached data that is stored within the cache memory 1172.

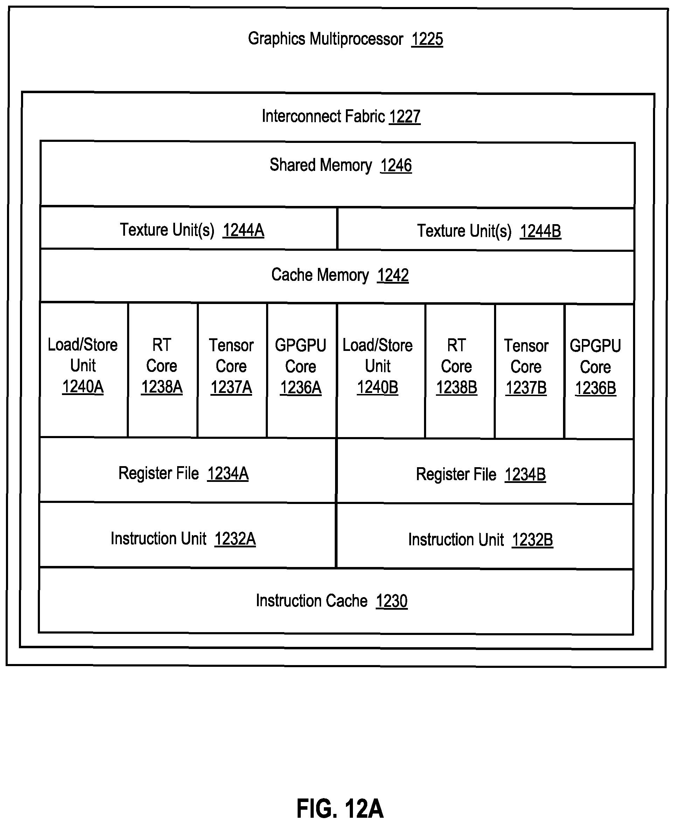

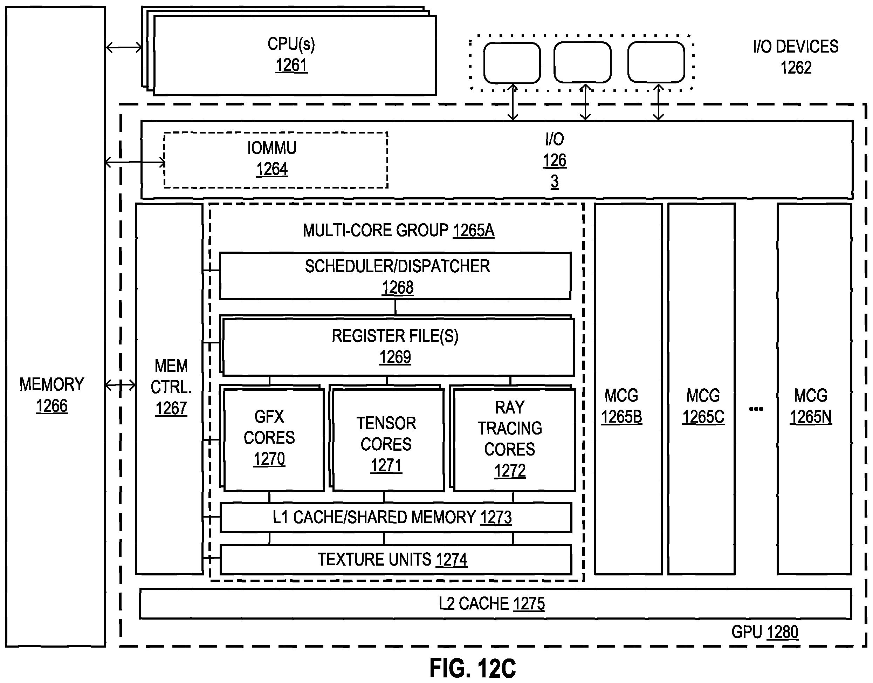

FIGS. 12A-12C illustrate additional graphics multiprocessors, according to examples. FIG. 12A-12B illustrate graphics multiprocessors 1225, 1250, which are related to the graphics multiprocessor 1134 of FIG. 11C and may be used in place of one of those. Therefore, the disclosure of any features in combination with the graphics multiprocessor 1134 herein also discloses a corresponding combination with the graphics multiprocessor(s) 1225, 1250, but is not limited to such. FIG. 12C illustrates a graphics processing unit (GPU) 1280 which includes dedicated sets of graphics processing resources arranged into multi-core groups 1265A-1265N, which correspond to the graphics multiprocessors 1225, 1250. The illustrated graphics multiprocessors 1225, 1250 and the multi-core groups 1265A-1265N can be streaming multiprocessors (SM) capable of simultaneous execution of a large number of execution threads.

The graphics multiprocessor 1225 of FIG. 12A includes multiple additional instances of execution resource units relative to the graphics multiprocessor 1134 of FIG. 11D. For example, the graphics multiprocessor 1225 can include multiple instances of the instruction unit 1232A-1232B, register file 1234A-1234B, and texture unit(s) 1244A-1244B. The graphics multiprocessor 1225 also includes multiple sets of graphics or compute execution units (e.g., GPGPU core 1236A-1236B, tensor core 1237A-1237B, ray-tracing core 1238A-1238B) and multiple sets of load/store units 1240A-1240B. The execution resource units have a common instruction cache 1230, texture and/or data cache memory 1242, and shared memory 1246.

The various components can communicate via an interconnect fabric 1227. The interconnect fabric 1227 may include one or more crossbar switches to enable communication between the various components of the graphics multiprocessor 1225. The interconnect fabric 1227 may be a separate, high-speed network fabric layer upon which each component of the graphics multiprocessor 1225 is stacked. The components of the graphics multiprocessor 1225 communicate with remote components via the interconnect fabric 1227. For example, the cores 1236A-1236B, 1237A-1237B, and 1238A-1238B can each communicate with shared memory 1246 via the interconnect fabric 1227. The interconnect fabric 1227 can arbitrate communication within the graphics multiprocessor 1225 to ensure a fair bandwidth allocation between components.

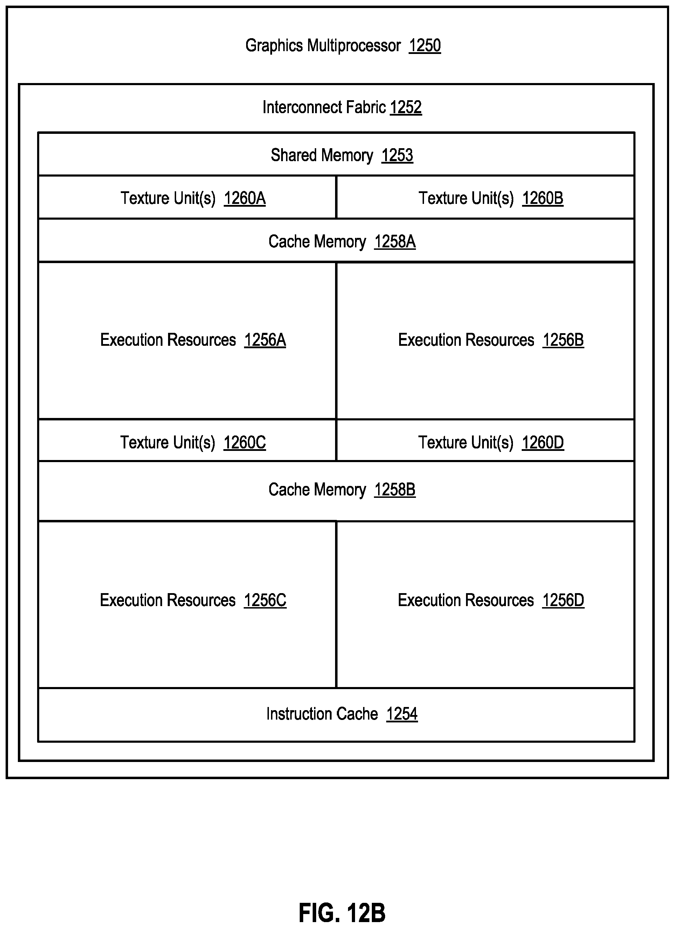

The graphics multiprocessor 1250 of FIG. 12B includes multiple sets of execution resources 1256A-1256D, where each set of execution resource includes multiple instruction units, register files, GPGPU cores, and load store units, as illustrated in FIG. 11D and FIG. 12A. The execution resources 1256A-1256D can work in concert with texture unit(s) 1260A-1260D for texture operations, while sharing an instruction cache 1254, and shared memory 1253. For example, the execution resources 1256A-1256D can share an instruction cache 1254 and shared memory 1253, as well as multiple instances of a texture and/or data cache memory 1258A-1258B. The various components can communicate via an interconnect fabric 1252 similar to the interconnect fabric 1227 of FIG. 12A.

Persons skilled in the art will understand that the architecture described in FIG. 1, 11A-11D, and 12A-12B are descriptive and not limiting as to the scope of the present examples. Thus, the techniques described herein may be implemented on any properly configured processing unit, including, without limitation, one or more mobile application processors, one or more desktop or server central processing units (CPUs) including multi-core CPUs, one or more parallel processing units, such as the parallel processing unit 1102 of FIG. 11A, as well as one or more graphics processors or special purpose processing units, without departure from the scope of the examples described herein.

The parallel processor or GPGPU as described herein may be communicatively coupled to host/processor cores to accelerate graphics operations, machine-learning operations, pattern analysis operations, and various general-purpose GPU (GPGPU) functions. The GPU may be communicatively coupled to the host processor/cores over a bus or other interconnect (e.g., a high-speed interconnect such as PCIe, NVLink, or other known protocols, standardized protocols, or proprietary protocols). In other examples, the GPU may be integrated on the same package or chip as the cores and communicatively coupled to the cores over an internal processor bus/interconnect (i.e., internal to the package or chip). Regardless of the manner in which the GPU is connected, the processor cores may allocate work to the GPU in the form of sequences of commands/instructions contained in a work descriptor. The GPU then uses dedicated circuitry/logic for efficiently processing these commands/instructions.

FIG. 12C illustrates a graphics processing unit (GPU) 1280 which includes dedicated sets of graphics processing resources arranged into multi-core groups 1265A-1265N. While the details of only a single multi-core group 1265A are provided, it will be appreciated that the other multi-core groups 1265B-1265N may be equipped with the same or similar sets of graphics processing resources. Details described with respect to the multi-core groups 1265A-1265N may also apply to any graphics multiprocessor 1134, 1225, 1250 described herein.

As illustrated, a multi-core group 1265A may include a set of graphics cores 1270, a set of tensor cores 1271, and a set of ray tracing cores 1272. A scheduler/dispatcher 1268 schedules and dispatches the graphics threads for execution on the various cores 1270, 1271, 1272. A set of register files 1269 store operand values used by the cores 1270, 1271, 1272 when executing the graphics threads. These may include, for example, integer registers for storing integer values, floating point registers for storing floating point values, vector registers for storing packed data elements (integer and/or floating-point data elements) and tile registers for storing tensor/matrix values. The tile registers may be implemented as combined sets of vector registers.

One or more combined level 1 (L1) caches and shared memory units 1273 store graphics data such as texture data, vertex data, pixel data, ray data, bounding volume data, etc., locally within each multi-core group 1265A. One or more texture units 1274 can also be used to perform texturing operations, such as texture mapping and sampling. A Level 2 (L2) cache 1275 shared by all or a subset of the multi-core groups 1265A-1265N stores graphics data and/or instructions for multiple concurrent graphics threads. As illustrated, the L2 cache 1275 may be shared across a plurality of multi-core groups 1265A-1265N. One or more memory controllers 1267 couple the GPU 1280 to a memory 1266 which may be a system memory (e.g., DRAM) and/or a dedicated graphics memory (e.g., GDDR6 memory).

Input/output (I/O) circuitry 1263 couples the GPU 1280 to one or more I/O devices 1262 such as digital signal processors (DSPs), network controllers, or user input devices. An on-chip interconnect may be used to couple the I/O devices 1262 to the GPU 1280 and memory 1266. One or more I/O memory management units (IOMMUs) 1264 of the I/O circuitry 1263 couple the I/O devices 1262 directly to the system memory 1266. Optionally, the IOMMU 1264 manages multiple sets of page tables to map virtual addresses to physical addresses in system memory 1266. The I/O devices 1262, CPU(s) 1261, and GPU(s) 1280 may then share the same virtual address space.

In one implementation of the IOMMU 1264, the IOMMU 1264 supports virtualization. In this case, it may manage a first set of page tables to map guest/graphics virtual addresses to guest/graphics physical addresses and a second set of page tables to map the guest/graphics physical addresses to system/host physical addresses (e.g., within system memory 1266). The base addresses of each of the first and second sets of page tables may be stored in control registers and swapped out on a context switch (e.g., so that the new context is provided with access to the relevant set of page tables). While not illustrated in FIG. 12C, each of the cores 1270, 1271, 1272 and/or multi-core groups 1265A-1265N may include translation lookaside buffers (TLBs) to cache guest virtual to guest physical translations, guest physical to host physical translations, and guest virtual to host physical translations.

The CPU(s) 1261, GPUs 1280, and I/O devices 1262 may be integrated on a single semiconductor chip and/or chip package. The illustrated memory 1266 may be integrated on the same chip or may be coupled to the memory controllers 1267 via an off-chip interface. In one implementation, the memory 1266 comprises GDDR6 memory which shares the same virtual address space as other physical system-level memories, although the underlying principles described herein are not limited to this specific implementation.

The tensor cores 1271 may include a plurality of execution units specifically designed to perform matrix operations, which are the fundamental compute operation used to perform deep learning operations. For example, simultaneous matrix multiplication operations may be used for neural network training and inferencing. The tensor cores 1271 may perform matrix processing using a variety of operand precisions including single precision floating-point (e.g., 32 bits), half-precision floating point (e.g., 16 bits), integer words (16 bits), bytes (8 bits), and half-bytes (4 bits). For example, a neural network implementation extracts features of each rendered scene, potentially combining details from multiple frames, to construct a high-quality final image.

In deep learning implementations, parallel matrix multiplication work may be scheduled for execution on the tensor cores 1271. The training of neural networks, in particular, requires a significant number of matrix dot product operations. In order to process an inner-product formulation of an N x N x N matrix multiply, the tensor cores 1271 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 1271 to ensure that the most efficient precision is used for different workloads (e.g., such as inferencing workloads which can tolerate quantization to bytes and half-bytes). Supported formats additionally include 64-bit floating point (FP64) and non-IEEE floating point formats such as the bfloat16 format (e.g., Brain floating point), a 16-bit floating point format with one sign bit, eight exponent bits, and eight significand bits, of which seven are explicitly stored. One example includes support for a reduced precision tensor-float (TF32) mode, which performs computations using the range of FP32 (8-bits) and the precision of FP16 (10-bits). Reduced precision TF32 operations can be performed on FP32 inputs and produce FP32 outputs at higher performance relative to FP32 and increased precision relative to FP16. In some examples, one or more 8-bit floating point formats (FP8) are supported.

In some examples the tensor cores 1271 support a sparse mode of operation for matrices in which the vast majority of values are zero. The tensor cores 1271 include support for sparse input matrices that are encoded in a sparse matrix representation (e.g., coordinate list encoding (COO), compressed sparse row (CSR), compress sparse column (CSC), etc.). The tensor cores 1271 also include support for compressed sparse matrix representations in the event that the sparse matrix representation may be further compressed. Compressed, encoded, and/or compressed and encoded matrix data, along with associated compression and/or encoding metadata, can be read by the tensor cores 1271 and the non-zero values can be extracted. For example, for a given input matrix A, a non-zero value can be loaded from the compressed and/or encoded representation of at least a portion of matrix A. Based on the location in matrix A for the non-zero value, which may be determined from index or coordinate metadata associated with the non-zero value, a corresponding value in input matrix B may be loaded. Depending on the operation to be performed (e.g., multiply), the load of the value from input matrix B may be bypassed if the corresponding value is a zero value. In some examples, the pairings of values for certain operations, such as multiply operations, may be pre-scanned by scheduler logic and only operations between non-zero inputs are scheduled. Depending on the dimensions of matrix A and matrix B and the operation to be performed, output matrix C may be dense or sparse. Where output matrix C is sparse and depending on the configuration of the tensor cores 1271, output matrix C may be output in a compressed format, a sparse encoding, or a compressed sparse encoding.

The ray tracing cores 1272 may accelerate ray tracing operations for both real-time ray tracing and non-real-time ray tracing implementations. In particular, the ray tracing cores 1272 may include ray traversal/intersection circuitry for performing ray traversal using bounding volume hierarchies (BVHs) and identifying intersections between rays and primitives enclosed within the BVH volumes. The ray tracing cores 1272 may also include circuitry for performing depth testing and culling (e.g., using a Z buffer or similar arrangement). In one implementation, the ray tracing cores 1272 perform traversal and intersection operations in concert with the image denoising techniques described herein, at least a portion of which may be executed on the tensor cores 1271. For example, the tensor cores 1271 may implement a deep learning neural network to perform denoising of frames generated by the ray tracing cores 1272. However, the CPU(s) 1261, graphics cores 1270, and/or ray tracing cores 1272 may also implement all or a portion of the denoising and/or deep learning algorithms.

In addition, as described above, a distributed approach to denoising may be employed in which the GPU 1280 is in a computing device coupled to other computing devices over a network or high-speed interconnect. In this distributed approach, the interconnected computing devices may share neural network learning/training data to improve the speed with which the overall system learns to perform denoising for different types of image frames and/or different graphics applications.

The ray tracing cores 1272 may process all BVH traversal and/or ray-primitive intersections, saving the graphics cores 1270 from being overloaded with thousands of instructions per ray. For example, each ray tracing core 1272 includes a first set of specialized circuitry for performing bounding box tests (e.g., for traversal operations) and/or a second set of specialized circuitry for performing the ray-triangle intersection tests (e.g., intersecting rays which have been traversed). Thus, for example, the multi-core group 1265A can simply launch a ray probe, and the ray tracing cores 1272 independently perform ray traversal and intersection and return hit data (e.g., a hit, no hit, multiple hits, etc.) to the thread context. The other cores 1270, 1271 are freed to perform other graphics or compute work while the ray tracing cores 1272 perform the traversal and intersection operations.

Optionally, each ray tracing core 1272 may include a traversal unit to perform BVH testing operations and/or an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 1270 and tensor cores 1271) are freed to perform other forms of graphics work.

In some examples described below, a hybrid rasterization/ray tracing approach is used in which work is distributed between the graphics cores 1270 and ray tracing cores 1272.

The ray tracing cores 1272 (and/or other cores 1270, 1271) may include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 1272, graphics cores 1270 and tensor cores 1271 is Vulkan API (e.g., Vulkan version 1.1.85 and later). Note, however, that the underlying principles described herein are not limited to any particular ray tracing ISA.

In general, the various cores 1272, 1271, 1270 may support a ray tracing instruction set that includes instructions/functions for one or more of ray generation, closest hit, any hit, ray-primitive intersection, per-primitive and hierarchical bounding box construction, miss, visit, and exceptions. More specifically, some examples include ray tracing instructions to perform one or more of the following functions:
- Ray Generation - Ray generation instructions may be executed for each pixel, sample, or other user-defined work assignment.
- Closest Hit - A closest hit instruction may be executed to locate the closest intersection point of a ray with primitives within a scene.
- Any Hit - An any hit instruction identifies multiple intersections between a ray and primitives within a scene, potentially to identify a new closest intersection point.
- Intersection - An intersection instruction performs a ray-primitive intersection test and outputs a result.
- Per-primitive Bounding box Construction - This instruction builds a bounding box around a given primitive or group of primitives (e.g., when building a new BVH or other acceleration data structure).
- Miss - Indicates that a ray misses all geometry within a scene, or specified region of a scene.
- Visit - Indicates the child volumes a ray will traverse.
- Exceptions - Includes various types of exception handlers (e.g., invoked for various error conditions).

In some examples the ray tracing cores 1272 may be adapted to accelerate general-purpose compute operations that can be accelerated using computational techniques that are analogous to ray intersection tests. A compute framework can be provided that enables shader programs to be compiled into low level instructions and/or primitives that perform general-purpose compute operations via the ray tracing cores. Exemplary computational problems that can benefit from compute operations performed on the ray tracing cores 1272 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 1272 can also be used to perform computations that are not directly analogous to ray tracing. For example, mesh projection, mesh refinement, and volume sampling computations can be accelerated using the ray tracing cores 1272. Generic coordinate space calculations, such as nearest neighbor calculations can also be performed. For example, the set of points near a given point can be discovered by defining a bounding box in the coordinate space around the point. BVH and ray probe logic within the ray tracing cores 1272 can then be used to determine the set of point intersections within the bounding box. The intersections constitute the origin point and the nearest neighbors to that origin point. Computations that are performed using the ray tracing cores 1272 can be performed in parallel with computations performed on the graphics cores 1272 and tensor cores 1271. A shader compiler can be configured to compile a compute shader or other general-purpose graphics processing program into low level primitives that can be parallelized across the graphics cores 1270, tensor cores 1271, and ray tracing cores 1272.

Building larger and larger silicon dies is challenging for a variety of reasons. As silicon dies become larger, manufacturing yields become smaller and process technology requirements for different components may diverge. On the other hand, in order to have a high-performance system, key components should be interconnected by high speed, high bandwidth, low latency interfaces. These contradicting needs pose a challenge to high performance chip development.

Embodiments described herein provide techniques to disaggregate an architecture of a system on a chip integrated circuit into multiple distinct chiplets that can be packaged onto a common chassis. In some examples, a graphics processing unit or parallel processor is composed from diverse silicon chiplets that are separately manufactured. A chiplet is an at least partially packaged integrated circuit that includes distinct units of logic that can be assembled with other chiplets into a larger package. A diverse set of chiplets with different IP core logic can be assembled into a single device. Additionally the chiplets can be integrated into a base die or base chiplet using active interposer technology. The concepts described herein enable the interconnection and communication between the different forms of IP within the GPU. The development of IPs on different process may be mixed. This avoids the complexity of converging multiple IPs, especially on a large SoC with several flavors IPs, to the same process.

Enabling the use of multiple process technologies improves the time to market and provides a cost-effective way to create multiple product SKUs. For customers, this means getting products that are more tailored to their requirements in a cost effective and timely manner. Additionally, the disaggregated IPs are more amenable to being power gated independently, components that are not in use on a given workload can be powered off, reducing overall power consumption.

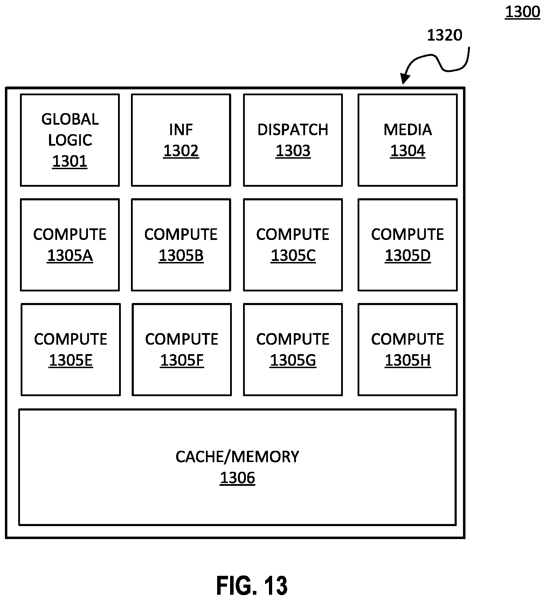

FIG. 13 shows a parallel compute system 1300, according to some examples. In some examples the parallel compute system 1300 includes a parallel processor 1320, which can be a graphics processor or compute accelerator as described herein. The parallel processor 1320 includes a global logic unit 1301, an interface 1302, a thread dispatcher 1303, a media unit 1304, a set of compute units 1305A-1305H, and a cache/memory units 1306. The global logic unit 1301, in some examples, includes global functionality for the parallel processor 1320, including device configuration registers, global schedulers, power management logic, and the like. The interface 1302 can include a front-end interface for the parallel processor 1320. The thread dispatcher 1303 can receive workloads from the interface 1302 and dispatch threads for the workload to the compute units 1305A-1305H. If the workload includes any media operations, at least a portion of those operations can be performed by the media unit 1304. The media unit can also offload some operations to the compute units 1305A-1305H. The cache/memory units 1306 can include cache memory (e.g., L3 cache) and local memory (e.g., HBM, GDDR) for the parallel processor 1320.

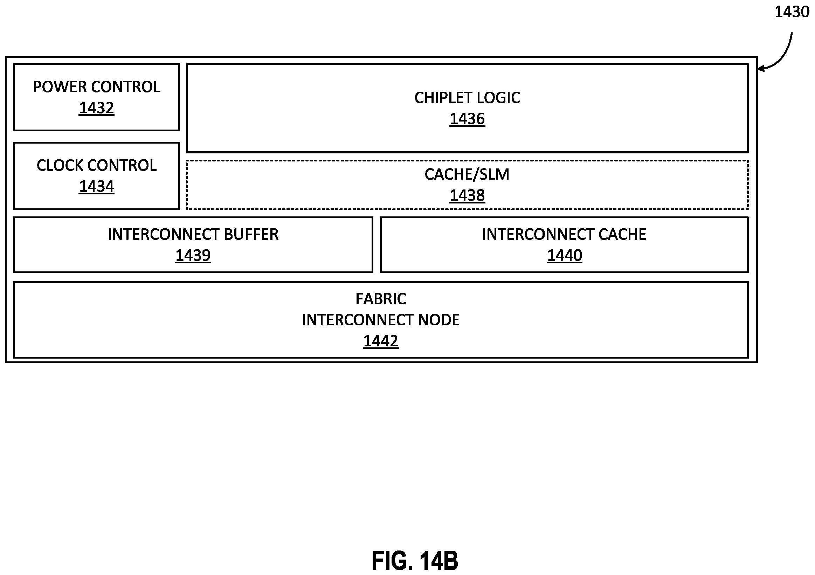

FIGS. 14A-14B illustrate a hybrid logical/physical view of a disaggregated parallel processor, according to examples described herein. FIG. 14A illustrates a disaggregated parallel compute system 1400. FIG. 14B illustrates a chiplet 1430 of the disaggregated parallel compute system 1400.

As shown in FIG. 14A, a disaggregated compute system 1400 can include a parallel processor 1420 in which the various components of the parallel processor SoC are distributed across multiple chiplets. Each chiplet can be a distinct IP core that is independently designed and configured to communicate with other chiplets via one or more common interfaces. The chiplets include but are not limited to compute chiplets 1405, a media chiplet 1404, and memory chiplets 1406. Each chiplet can be separately manufactured using different process technologies. For example, compute chiplets 1405 may be manufactured using the smallest or most advanced process technology available at the time of fabrication, while memory chiplets 1406 or other chiplets (e.g., I/O, networking, etc.) may be manufactured using a larger or less advanced process technologies.

The various chiplets can be bonded to a base die 1410 and configured to communicate with each other and logic within the base die 1410 via an interconnect layer 1412. In some examples, the base die 1410 can include global logic 1401, which can include scheduler 1411 and power management 1421 logic units, an interface 1402, a dispatch unit 1403, and an interconnect fabric module 1408 coupled with or integrated with one or more L3 cache banks 1409A-1409N. The interconnect fabric 1408 can be an inter-chiplet fabric that is integrated into the base die 1410. Logic chiplets can use the fabric 1408 to relay messages between the various chiplets. Additionally, L3 cache banks 1409A-1409N in the base die and/or L3 cache banks within the memory chiplets 1406 can cache data read from and transmitted to DRAM chiplets within the memory chiplets 1406 and to system memory of a host.

In some examples the global logic 1401 is a microcontroller that can execute firmware to perform scheduler 1411 and power management 1421 functionality for the parallel processor 1420. The microcontroller that executes the global logic can be tailored for the target use case of the parallel processor 1420. The scheduler 1411 can perform global scheduling operations for the parallel processor 1420. The power management 1421 functionality can be used to enable or disable individual chiplets within the parallel processor when those chiplets are not in use.

The various chiplets of the parallel processor 1420 can be designed to perform specific functionality that, in existing designs, would be integrated into a single die. A set of compute chiplets 1405 can include clusters of compute units (e.g., execution units, streaming multiprocessors, etc.) that include programmable logic to execute compute or graphics shader instructions. A media chiplet 1404 can include hardware logic to accelerate media encode and decode operations. Memory chiplets 1406 can include volatile memory (e.g., DRAM) and one or more SRAM cache memory banks (e.g., L3 banks).

As shown in FIG. 14B, each chiplet 1430 can include common components and application specific components. Chiplet logic 1436 within the chiplet 1430 can include the specific components of the chiplet, such as an array of streaming multiprocessors, compute units, or execution units described herein. The chiplet logic 1436 can couple with an optional cache or shared local memory 1438 or can include a cache or shared local memory within the chiplet logic 1436. The chiplet 1430 can include a fabric interconnect node 1442 that receives commands via the inter-chiplet fabric. Commands and data received via the fabric interconnect node 1442 can be stored temporarily within an interconnect buffer 1439. Data transmitted to and received from the fabric interconnect node 1442 can be stored in an interconnect cache 1440. Power control 1432 and clock control 1434 logic can also be included within the chiplet. The power control 1432 and clock control 1434 logic can receive configuration commands via the fabric can configure dynamic voltage and frequency scaling for the chiplet 1430. In some examples, each chiplet can have an independent clock domain and power domain and can be clock gated and power gated independently of other chiplets.

At least a portion of the components within the illustrated chiplet 1430 can also be included within logic embedded within the base die 1410 of FIG. 14A. For example, logic within the base die that communicates with the fabric can include a version of the fabric interconnect node 1442. Base die logic that can be independently clock or power gated can include a version of the power control 1432 and/or clock control 1434 logic.

Thus, while various examples described herein use the term SoC to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

### Graphics Execution Units

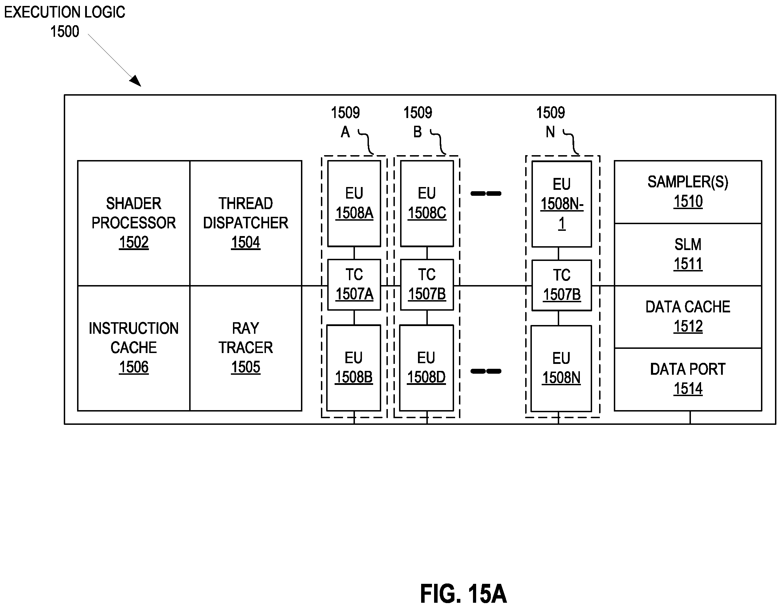

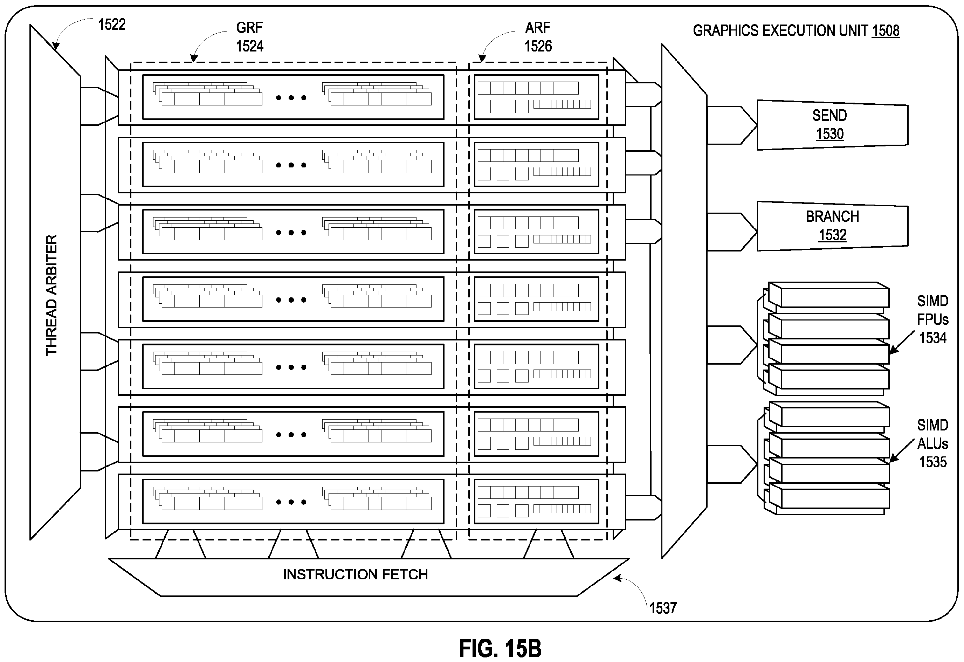

FIGS. 15A-15B illustrate thread execution logic 1500 including an array of processing elements employed in a graphics processor core according to examples described herein. Elements of Figures 15A-15B having the same reference numbers (or names) as the elements of any other figure herein can operate or function in any manner similar to that described elsewhere herein, but are not limited to such. Figure 15A is representative of an execution unit within a general-purpose graphics processor, while Figure 15B is representative of an execution unit that may be used within a compute accelerator.

As illustrated in Figure 15A, in some examples thread execution logic 1500 includes a shader processor 1502, a thread dispatcher 1504, instruction cache 1506, a scalable execution unit array including a plurality of execution units 1508A-1508N, a sampler 1510, shared local memory 1511, a data cache 1512, and a data port 1514. In some examples the scalable execution unit array can dynamically scale by enabling or disabling one or more execution units (e.g., any of execution units 1508A, 1508B, 1508C, 1508D, through 1508N-1 and 1508N) based on the computational requirements of a workload. In some examples the included components are interconnected via an interconnect fabric that links to each of the components. In some examples, thread execution logic 1500 includes one or more connections to memory, such as system memory or cache memory, through one or more of instruction cache 1506, data port 1514, sampler 1510, and execution units 1508A-1508N. In some examples, each execution unit (e.g. 1508A) is a stand-alone programmable general-purpose computational unit that is capable of executing multiple simultaneous hardware threads while processing multiple data elements in parallel for each thread. In various examples, the array of execution units 1508A-1508N is scalable to include any number individual execution units.

In some examples, the execution units 1508A-1508N are primarily used to execute shader programs. A shader processor 1502 can process the various shader programs and dispatch execution threads associated with the shader programs via a thread dispatcher 1504. In some examples the thread dispatcher includes logic to arbitrate thread initiation requests from the graphics and media pipelines and instantiate the requested threads on one or more execution unit in the execution units 1508A-1508N. For example, a geometry pipeline can dispatch vertex, tessellation, or geometry shaders to the thread execution logic for processing. In some examples, thread dispatcher 1504 can also process runtime thread spawning requests from the executing shader programs.

In some examples, the execution units 1508A-1508N support an instruction set that includes native support for many standard 3D graphics shader instructions, such that shader programs from graphics libraries (e.g., Direct 3D and OpenGL) are executed with a minimal translation. The execution units support vertex and geometry processing (e.g., vertex programs, geometry programs, vertex shaders), pixel processing (e.g., pixel shaders, fragment shaders) and general-purpose processing (e.g., compute and media shaders). Each of the execution units 1508A-1508N is capable of multi-issue single instruction multiple data (SIMD) execution and multi-threaded operation enables an efficient execution environment in the face of higher latency memory accesses. Each hardware thread within each execution unit has a dedicated high-bandwidth register file and associated independent thread-state. Execution is multi-issue per clock to pipelines capable of integer, single and double precision floating point operations, SIMD branch capability, logical operations, transcendental operations, and other miscellaneous operations. While waiting for data from memory or one of the shared functions, dependency logic within the execution units 1508A-1508N causes a waiting thread to sleep until the requested data has been returned. While the waiting thread is sleeping, hardware resources may be devoted to processing other threads. For example, during a delay associated with a vertex shader operation, an execution unit can perform operations for a pixel shader, fragment shader, or another type of shader program, including a different vertex shader. Various examples can apply to use execution by use of Single Instruction Multiple Thread (SIMT) as an alternate to use of SIMD or in addition to use of SIMD. Reference to a SIMD core or operation can apply also to SIMT or apply to SIMD in combination with SIMT.

Each execution unit in execution units 1508A-1508N operates on arrays of data elements. The number of data elements is the "execution size," or the number of channels for the instruction. An execution channel is a logical unit of execution for data element access, masking, and flow control within instructions. The number of channels may be independent of the number of physical Arithmetic Logic Units (ALUs) or Floating-Point Units (FPUs) for a particular graphics processor. In some examples, execution units 1508A-1508N support integer and floating-point data types.

The execution unit instruction set includes SIMD instructions. The various data elements can be stored as a packed data type in a register and the execution unit will process the various elements based on the data size of the elements. For example, when operating on a 256-bit wide vector, the 256 bits of the vector are stored in a register and the execution unit operates on the vector as four separate 64-bit packed data elements (Quad-Word (QW) size data elements), eight separate 32-bit packed data elements (Double Word (DW) size data elements), sixteen separate 16-bit packed data elements (Word (W) size data elements), or thirty-two separate 8-bit data elements (byte (B) size data elements). However, different vector widths and register sizes are possible.

In some examples one or more execution units can be combined into a fused execution unit 1509A-1509N having thread control logic (1507A-1507N) that is common to the fused EUs. Multiple EUs can be fused into an EU group. Each EU in the fused EU group can be configured to execute a separate SIMD hardware thread. The number of EUs in a fused EU group can vary according to examples. Additionally, various SIMD widths can be performed per-EU, including but not limited to SIMD8, SIMD 16, and SIMD32. Each fused graphics execution unit 1509A-1509N includes at least two execution units. For example, fused execution unit 1509A includes a first EU 1508A, second EU 1508B, and thread control logic 1507A that is common to the first EU 1508A and the second EU 1508B. The thread control logic 1507A controls threads executed on the fused graphics execution unit 1509A, allowing each EU within the fused execution units 1509A-1509N to execute using a common instruction pointer register.

One or more internal instruction caches (e.g., 1506) are included in the thread execution logic 1500 to cache thread instructions for the execution units. In some examples, one or more data caches (e.g., 1512) are included to cache thread data during thread execution. Threads executing on the execution logic 1500 can also store explicitly managed data in the shared local memory 1511. In some examples, a sampler 1510 is included to provide texture sampling for 3D operations and media sampling for media operations. In some examples, sampler 1510 includes specialized texture or media sampling functionality to process texture or media data during the sampling process before providing the sampled data to an execution unit.

During execution, the graphics and media pipelines send thread initiation requests to thread execution logic 1500 via thread spawning and dispatch logic. Once a group of geometric objects has been processed and rasterized into pixel data, pixel processor logic (e.g., pixel shader logic, fragment shader logic, etc.) within the shader processor 1502 is invoked to further compute output information and cause results to be written to output surfaces (e.g., color buffers, depth buffers, stencil buffers, etc.). In some examples, a pixel shader or fragment shader calculates the values of the various vertex attributes that are to be interpolated across the rasterized object. In some examples, pixel processor logic within the shader processor 1502 then executes an application programming interface (API)-supplied pixel or fragment shader program. To execute the shader program, the shader processor 1502 dispatches threads to an execution unit (e.g., 1508A) via thread dispatcher 1504. In some examples, shader processor 1502 uses texture sampling logic in the sampler 1510 to access texture data in texture maps stored in memory. Arithmetic operations on the texture data and the input geometry data compute pixel color data for each geometric fragment, or discards one or more pixels from further processing.

In some examples, the data port 1514 provides a memory access mechanism for the thread execution logic 1500 to output processed data to memory for further processing on a graphics processor output pipeline. In some examples, the data port 1514 includes or couples to one or more cache memories (e.g., data cache 1512) to cache data for memory access via the data port.

In some examples, the execution logic 1500 can also include a ray tracer 1505 that can provide ray tracing acceleration functionality. The ray tracer 1505 can support a ray tracing instruction set that includes instructions/functions for ray generation.

Figure 15B illustrates exemplary internal details of an execution unit 1508, according to examples. A graphics execution unit 1508 can include an instruction fetch unit 1537, a general register file array (GRF) 1524, an architectural register file array (ARF) 1526, a thread arbiter 1522, a send unit 1530, a branch unit 1532, a set of SIMD floating point units (FPUs) 1534, and in some examples a set of dedicated integer SIMD ALUs 1535. The GRF 1524 and ARF 1526 includes the set of general register files and architecture register files associated with each simultaneous hardware thread that may be active in the graphics execution unit 1508. In some examples, per thread architectural state is maintained in the ARF 1526, while data used during thread execution is stored in the GRF 1524. The execution state of each thread, including the instruction pointers for each thread, can be held in thread-specific registers in the ARF 1526.

In some examples the graphics execution unit 1508 has an architecture that is a combination of Simultaneous Multi-Threading (SMT) and fine-grained Interleaved Multi-Threading (IMT). The architecture has a modular configuration that can be fine-tuned at design time based on a target number of simultaneous threads and number of registers per execution unit, where execution unit resources are divided across logic used to execute multiple simultaneous threads. The number of logical threads that may be executed by the graphics execution unit 1508 is not limited to the number of hardware threads, and multiple logical threads can be assigned to each hardware thread.

In some examples, the graphics execution unit 1508 can co-issue multiple instructions, which may each be different instructions. The thread arbiter 1522 of the graphics execution unit thread 1508 can dispatch the instructions to one of the send unit 1530, branch unit 1532, or SIMD FPU(s) 1534 for execution. Each execution thread can access 128 general-purpose registers within the GRF 1524, where each register can store 32 bytes, accessible as a SIMD 8-element vector of 32-bit data elements. In some examples, each execution unit thread has access to 4 Kbytes within the GRF 1524, although examples are not so limited, and greater or fewer register resources may be provided in other examples. In some examples the graphics execution unit 1508 is partitioned into seven hardware threads that can independently perform computational operations, although the number of threads per execution unit can also vary according to examples. For example, in some examples up to 16 hardware threads are supported. In an example in which seven threads may access 4 Kbytes, the GRF 1524 can store a total of 28 Kbytes. Where 16 threads may access 4Kbytes, the GRF 1524 can store a total of 64Kbytes. Flexible addressing modes can permit registers to be addressed together to build effectively wider registers or to represent strided rectangular block data structures.

In some examples, memory operations, sampler operations, and other longer-latency system communications are dispatched via "send" instructions that are executed by the message passing send unit 1530. In some examples, branch instructions are dispatched to a dedicated branch unit 1532 to facilitate SIMD divergence and eventual convergence.

In some examples the graphics execution unit 1508 includes one or more SIMD floating point units (FPU(s)) 1534 to perform floating-point operations. In some examples, the FPU(s) 1534 also support integer computation. In some examples the FPU(s) 1534 can SIMD execute up to M number of 32-bit floating-point (or integer) operations, or SIMD execute up to 2M 16-bit integer or 16-bit floating-point operations. In some examples, at least one of the FPU(s) provides extended math capability to support high-throughput transcendental math functions and double precision 64-bit floating-point. In some examples, a set of 8-bit integer SIMD ALUs 1535 are also present, and may be specifically optimized to perform operations associated with machine learning computations.

In some examples, arrays of multiple instances of the graphics execution unit 1508 can be instantiated in a graphics sub-core grouping (e.g., a sub-slice). For scalability, product architects can choose the exact number of execution units per sub-core grouping. In some examples the execution unit 1508 can execute instructions across a plurality of execution channels. In a further example, each thread executed on the graphics execution unit 1508 is executed on a different channel.

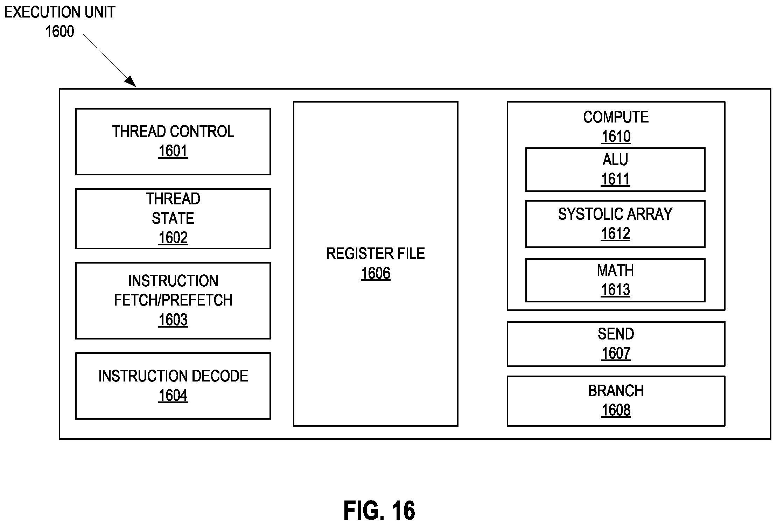

Figure 16 illustrates an additional execution unit 1600, according to an example. In some examples, the execution unit 1600 includes a thread control unit 1601, a thread state unit 1602, an instruction fetch/prefetch unit 1603, and an instruction decode unit 1604. Execution unit 1600 additionally includes a register file 1606 that stores registers that can be assigned to hardware threads within the execution unit. Execution unit 1600 additionally includes a send unit 1607 and a branch unit 1608. In some examples, the send unit 1607 and branch unit 1608 can operate similarly as the send unit 1530 and a branch unit 1532 of the graphics execution unit 1508 of Figure 15B.

The execution unit 1600 also includes a compute unit 1610 that includes multiple different types of functional units. In some examples the compute unit 1610 includes an ALU unit 1611 that includes an array of arithmetic logic units. The ALU unit 1611 can be configured to perform 64-bit, 32-bit, and 16-bit integer and floating-point operations. Integer and floating-point operations may be performed simultaneously. The compute unit 1610 can also include a systolic array 1612, and a math unit 1613. The systolic array 1612 includes a *W* wide and *D* deep network of data processing units that can be used to perform vector or other data-parallel operations in a systolic manner. In some examples the systolic array 1612 can be configured to perform matrix operations, such as matrix dot product operations. In some examples the systolic array 1612 support 16-bit floating point operations, as well as 8-bit and 4-bit integer operations. In some examples the systolic array 1612 can be configured to accelerate machine learning operations. In such examples, the systolic array 1612 can be configured with support for the bfloat 16-bit floating point format. In some examples, a math unit 1613 can be included to perform a specific subset of mathematical operations in an efficient and lower-power manner than then ALU unit 1611. The math unit 1613 can include a variant of math logic that may be found in shared function logic of a graphics processing engine provided by other examples. In some examples the math unit 1613 can be configured to perform 32-bit and 64-bit floating point operations.

The thread control unit 1601 includes logic to control the execution of threads within the execution unit. The thread control unit 1601 can include thread arbitration logic to start, stop, and preempt execution of threads within the execution unit 1600. The thread state unit 1602 can be used to store thread state for threads assigned to execute on the execution unit 1600. Storing the thread state within execution unit 1600 enables the rapid pre-emption of threads when those threads become blocked or idle. The instruction fetch/prefetch unit 1603 can fetch instructions from an instruction cache of higher-level execution logic (e.g., instruction cache 1506 as in Figure 15A). The instruction fetch/prefetch unit 1603 can also issue prefetch requests for instructions to be loaded into the instruction cache based on an analysis of currently executing threads. The instruction decode unit 1604 can be used to decode instructions to be executed by the compute units. In some examples, the instruction decode unit 1604 can be used as a secondary decoder to decode complex instructions into constituent micro-operations.

Execution unit 1600 additionally includes a register file 1606 that can be used by hardware threads executing on the execution unit 1600. Registers in the register file 1606 can be divided across the logic used to execute multiple simultaneous threads within the compute unit 1610 of the execution unit 1600. The number of logical threads that may be executed by the graphics execution unit 1600 is not limited to the number of hardware threads, and multiple logical threads can be assigned to each hardware thread. The size of the register file 1606 can vary across examples based on the number of supported hardware threads. In some examples, register renaming may be used to dynamically allocate registers to hardware threads.

### Graphics Pipeline

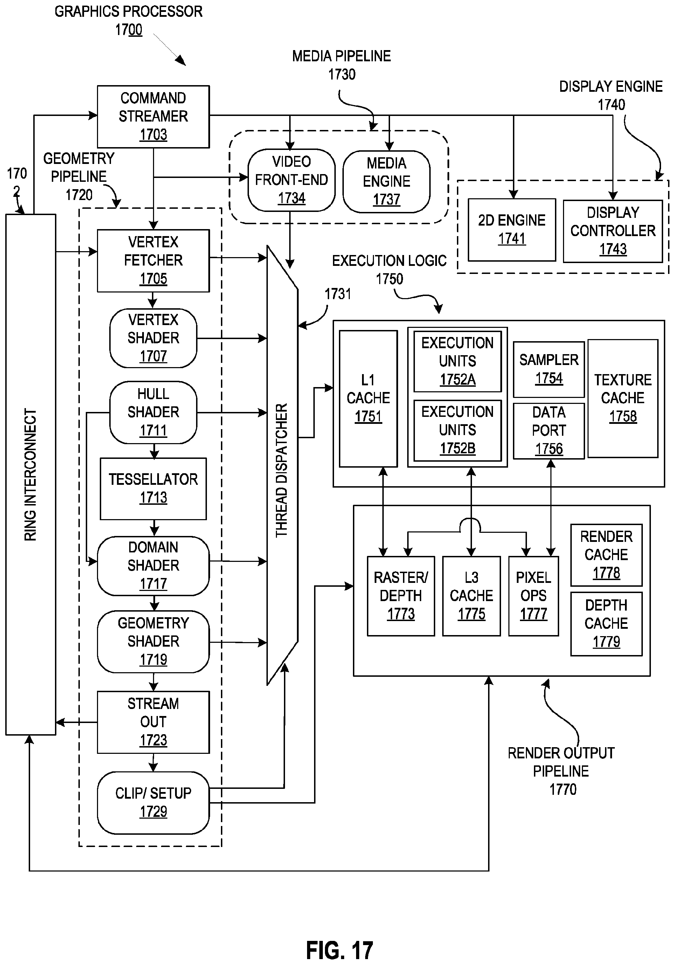

Figure 17 is a block diagram of another example of a graphics processor 1700. Elements of Figure 17 having the same reference numbers (or names) as the elements of any other figure herein can operate or function in any manner similar to that described elsewhere herein, but are not limited to such.

In some examples, graphics processor 1700 includes a geometry pipeline 1720, a media pipeline 1730, a display engine 1740, thread execution logic 1750, and a render output pipeline 1770. In some examples, graphics processor 1700 is a graphics processor within a multi-core processing system that includes one or more general-purpose processing cores. The graphics processor is controlled by register writes to one or more control registers (not shown) or via commands issued to graphics processor 1700 via a ring interconnect 1702. In some examples, ring interconnect 1702 couples graphics processor 1700 to other processing components, such as other graphics processors or general-purpose processors. Commands from ring interconnect 1702 are interpreted by a command streamer 1703, which supplies instructions to individual components of the geometry pipeline 1720 or the media pipeline 1730.

In some examples, command streamer 1703 directs the operation of a vertex fetcher 1705 that reads vertex data from memory and executes vertex-processing commands provided by command streamer 1703. In some examples, vertex fetcher 1705 provides vertex data to a vertex shader 1707, which performs coordinate space transformation and lighting operations to each vertex. In some examples, vertex fetcher 1705 and vertex shader 1707 execute vertex-processing instructions by dispatching execution threads to execution units 1752A-1752B via a thread dispatcher 1731.

In some examples, execution units 1752A-1752B are an array of vector processors having an instruction set for performing graphics and media operations. In some examples, execution units 1752A-1752B have an attached L1 cache 1751 that is specific for each array or shared between the arrays. The cache can be configured as a data cache, an instruction cache, or a single cache that is partitioned to contain data and instructions in different partitions.

In some examples, geometry pipeline 1720 includes tessellation components to perform hardware-accelerated tessellation of 3D objects. In some examples, a programmable hull shader 1711 configures the tessellation operations. A programmable domain shader 1717 provides back-end evaluation of tessellation output. A tessellator 1713 operates at the direction of hull shader 1711 and contains special purpose logic to generate a set of detailed geometric objects based on a coarse geometric model that is provided as input to geometry pipeline 1720. In some examples, if tessellation is not used, tessellation components (e.g., hull shader 1711, tessellator 1713, and domain shader 1717) can be bypassed.

In some examples, complete geometric objects can be processed by a geometry shader 1719 via one or more threads dispatched to execution units 1752A-1752B, or can proceed directly to the clipper 1729. In some examples, the geometry shader operates on entire geometric objects, rather than vertices or patches of vertices as in previous stages of the graphics pipeline. If the tessellation is disabled the geometry shader 1719 receives input from the vertex shader 1707. In some examples, geometry shader 1719 is programmable by a geometry shader program to perform geometry tessellation if the tessellation units are disabled.

Before rasterization, a clipper 1729 processes vertex data. The clipper 1729 may be a fixed function clipper or a programmable clipper having clipping and geometry shader functions. In some examples, a rasterizer and depth test component 1773 in the render output pipeline 1770 dispatches pixel shaders to convert the geometric objects into per pixel representations. In some examples, pixel shader logic is included in thread execution logic 1750. In some examples, an application can bypass the rasterizer and depth test component 1773 and access un-rasterized vertex data via a stream out unit 1723.

The graphics processor 1700 has an interconnect bus, interconnect fabric, or some other interconnect mechanism that allows data and message passing amongst the major components of the processor. In some examples, execution units 1752A-1752B and associated logic units (e.g., L1 cache 1751, sampler 1754, texture cache 1758, etc.) interconnect via a data port 1756 to perform memory access and communicate with render output pipeline components of the processor. In some examples, sampler 1754, caches 1751, 1758 and execution units 1752A-1752B each have separate memory access paths. In some examples the texture cache 1758 can also be configured as a sampler cache.

In some examples, render output pipeline 1770 contains a rasterizer and depth test component 1773 that converts vertex-based objects into an associated pixel-based representation. In some examples, the rasterizer logic includes a windower/masker unit to perform fixed function triangle and line rasterization. An associated render cache 1778 and depth cache 1779 are also available in some examples. A pixel operations component 1777 performs pixel-based operations on the data, though in some instances, pixel operations associated with 2D operations (e.g. bit block image transfers with blending) are performed by the 2D engine 1741, or substituted at display time by the display controller 1743 using overlay display planes. In some examples, a shared L3 cache 1775 is available to all graphics components, allowing the sharing of data without the use of main system memory.

In some examples, graphics processor media pipeline 1730 includes a media engine 1737 and a video front-end 1734. In some examples, video front-end 1734 receives pipeline commands from the command streamer 1703. In some examples, media pipeline 1730 includes a separate command streamer. In some examples, video front-end 1734 processes media commands before sending the command to the media engine 1737. In some examples, media engine 1737 includes thread spawning functionality to spawn threads for dispatch to thread execution logic 1750 via thread dispatcher 1731.

In some examples, graphics processor 1700 includes a display engine 1740. In some examples, display engine 1740 is external to processor 1700 and couples with the graphics processor via the ring interconnect 1702, or some other interconnect bus or fabric. In some examples, display engine 1740 includes a 2D engine 1741 and a display controller 1743. In some examples, display engine 1740 contains special purpose logic capable of operating independently of the 3D pipeline. In some examples, display controller 1743 couples with a display device (not shown), which may be a system integrated display device, as in a laptop computer, or an external display device attached via a display device connector.

In some examples, the geometry pipeline 1720 and media pipeline 1730 are configurable to perform operations based on multiple graphics and media programming interfaces and are not specific to any one application programming interface (API). In some examples, driver software for the graphics processor translates API calls that are specific to a particular graphics or media library into commands that can be processed by the graphics processor. In some examples, support is provided for the Open Graphics Library (OpenGL), Open Computing Language (OpenCL), and/or Vulkan graphics and compute API, all from the Khronos Group. In some examples, support may also be provided for the Direct3D library from the Microsoft Corporation. In some examples, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

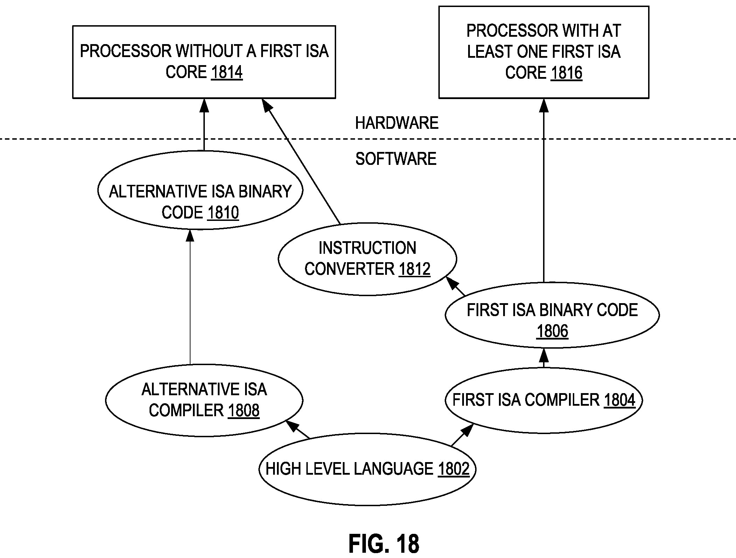

FIG. 18 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 18 shows a program in a high-level language 1802 may be compiled using a first ISA compiler 1804 to generate first ISA binary code 1806 that may be natively executed by a processor with at least one first ISA core 1816. The processor with at least one first ISA core 1816 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 1804 represents a compiler that is operable to generate first ISA binary code 1806 (e.g., object code) that can, with or without additional linkage processing, be executed on the processor with at least one first ISA core 1816. Similarly, FIG. 18 shows the program in the high-level language 1802 may be compiled using an alternative ISA compiler 1808 to generate alternative ISA binary code 1810 that may be natively executed by a processor without a first ISA core 1814. The instruction converter 1812 is used to convert the first ISA binary code 1806 into code that may be natively executed by the processor without a first ISA core 1814. This converted code is not necessarily to be the same as the alternative ISA binary code 1810; however, the converted code will accomplish the general operation and be made up of instructions from the alternative ISA. Thus, the instruction converter 1812 represents software, firmware, hardware, or a combination thereof that, through emulation, simulation or any other process, allows a processor or other electronic device that does not have a first ISA processor or core to execute the first ISA binary code 1806.

### IP Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

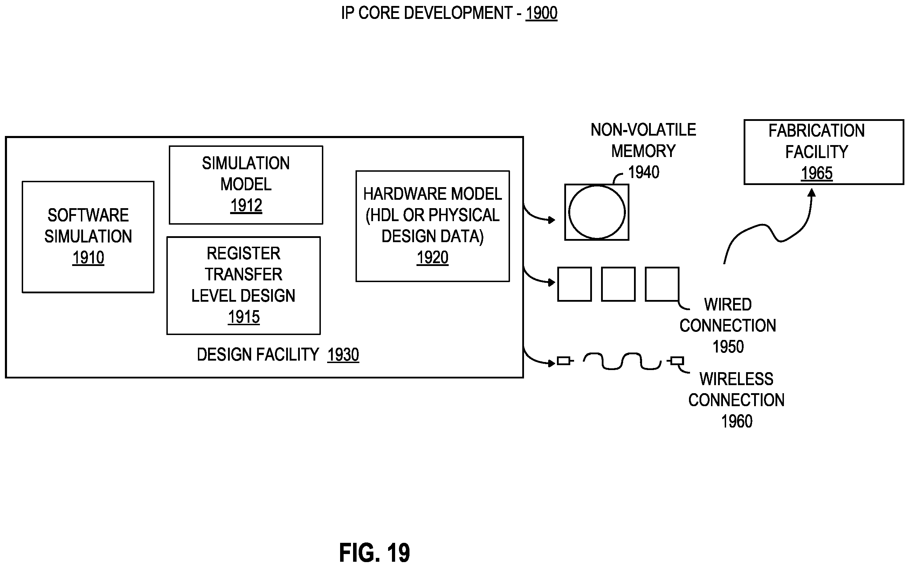

FIG. 19 is a block diagram illustrating an IP core development system 1900 that may be used to manufacture an integrated circuit to perform operations according to some examples. The IP core development system 1900 may be used to generate modular, re-usable designs that can be incorporated into a larger design or used to construct an entire integrated circuit (e.g., an SoC integrated circuit). A design facility 1930 can generate a software simulation 1910 of an IP core design in a high-level programming language (e.g., C/C++). The software simulation 1910 can be used to design, test, and verify the behavior of the IP core using a simulation model 1912. The simulation model 1912 may include functional, behavioral, and/or timing simulations. A register transfer level (RTL) design 1915 can then be created or synthesized from the simulation model 1912. The RTL design 1915 is an abstraction of the behavior of the integrated circuit that models the flow of digital signals between hardware registers, including the associated logic performed using the modeled digital signals. In addition to an RTL design 1915, lower-level designs at the logic level or transistor level may also be created, designed, or synthesized. Thus, the particular details of the initial design and simulation may vary.

The RTL design 1915 or equivalent may be further synthesized by the design facility into a hardware model 1920, which may be in a hardware description language (HDL), or some other representation of physical design data. The HDL may be further simulated or tested to verify the IP core design. The IP core design can be stored for delivery to a 3^{rd} party fabrication facility 1965 using non-volatile memory 1940 (e.g., hard disk, flash memory, or any non-volatile storage medium). Alternatively, the IP core design may be transmitted (e.g., via the Internet) over a wired connection 1950 or wireless connection 1960. The fabrication facility 1965 may then fabricate an integrated circuit that is based at least in part on the IP core design. The fabricated integrated circuit can be configured to perform operations in accordance with at least some examples described herein.

Although some embodiments have been described in reference to particular implementations, other implementations are possible according to some embodiments. Additionally, the arrangement and/or order of elements or other features illustrated in the drawings and/or described herein need not be arranged in the particular way illustrated and described. Many other arrangements are possible according to some embodiments.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

An embodiment is an implementation or example of the disclosure. Reference in the specification to "an embodiment," "one embodiment," "some embodiments," or "other embodiments" means that a particular feature, structure, or characteristic described in connection with the embodiments is included in at least some embodiments, but not necessarily all embodiments, of the disclosure. The various appearances "an embodiment," "one embodiment," or "some embodiments" are not necessarily all referring to the same embodiments.

Not all components, features, structures, characteristics, etc. described and illustrated herein need to be included in a particular embodiment or embodiments. If the specification states a component, feature, structure, or characteristic "may", "might", "can", or "could" be included, for example, that particular component, feature, structure, or characteristic is not required to be included. If the specification or claim refers to "a" or "an" element, that does not mean there is only one of the elements. If the specification or claims refer to "an additional" element, that does not preclude there being more than one of the additional elements.

The above description of illustrated embodiments of the disclosure, including what is described in the Abstract, is not intended to be exhaustive or to limit the disclosure to the precise forms disclosed. While specific embodiments of, and examples for, the disclosure are described herein for illustrative purposes, various equivalent modifications are possible within the scope of the disclosure, as those skilled in the relevant art will recognize.

These modifications can be made to the disclosure in light of the above detailed description. The terms used in the following claims should not be construed to limit the disclosure to the specific embodiments disclosed in the specification and the drawings. Rather, the scope of the disclosure is to be determined entirely by the following claims, which are to be construed in accordance with established doctrines of claim interpretation.

### Further Examples

Example 1 provides a computer processing system comprising a plurality of computational units to execute tasks for one or more applications; a plurality of sensors, coupled to the plurality of computational units, to collect measurement data of the plurality of computational units; and a storage to store hardware health statuses corresponding to each of the plurality of computational units, wherein the health statuses are based on the measurement data, the plurality of computational units to be scheduled to perform task execution on the computer processing system for the one or more applications based on the hardware health statuses of the plurality of computational units, wherein a first computational unit of the plurality of computational units is to be excluded from the task execution responsive to its corresponding first hardware health status indicating an impending hardware failure.

Example 2 includes the substance of Example 1, wherein error screening content is scheduled to be executed along with the tasks for the one or more applications to further determine the hardware health statuses of the plurality of computational units.

Example 3 includes the substance of Examples 1 to 2, wherein the error screening content includes a test package for silent data error (SDE).

Example 4 includes the substance of Examples 1 to 3, wherein the error screening content is to be executed as an application.

Example 5 includes the substance of Examples 1 to 4, wherein the error screening content is to be executed on a computational unit responsive to the computational unit running below capacity with the task execution for the one or more applications.

Example 6 includes the substance of Examples 1 to 5, wherein the statuses of the plurality of computational units are to be updated based on the measurement data periodically obtained from the plurality of sensors.

Example 7 includes the substance of Examples 1 to 6, where the plurality of sensors includes one or more of an Intra-Die Variation (IDV) oscillator, a voltage threshold draft sensor, a reference critical path delay draft sensor, a replication path timing/voltage draft sensor, or a component level Built-In Self Test (BIST) logic.

Example 8 includes the substance of Examples 1 to 7, wherein the plurality of computational units includes one or more of following entities in the computer processing system: a set of central processing unit (CPU) cores, a set of graphics processing unit (GPU) cores, a set of tensor processing units (TPUs), a set of intelligence processing units (IPU) cores, and a set of memory units.

Example 9 includes the substance of Examples 1 to 8, wherein the plurality of computational units includes one or more components of the sets of CPU cores, GPU cores, TPU cores, IPU cores, and memory units.

Example 10 includes the substance of Examples 1 to 9, wherein machine learning or heuristic method is to be used to determine the statuses of the plurality of computational units.

Example 11 includes the substance of Examples 1 to 10, wherein responsive to the hardware health status of a first set of computational units of no hardware health concerns and a hardware health status of a second set of computational units of no failure but an impending hardware failure, the second set of computational units are to be excluded from the task execution.

Example 12 includes the substance of Examples 1 to 11, wherein tasks of a second computational unit of the plurality of computational units are to be moved to a third computational unit of the plurality of computational units responsive to a corresponding second hardware health status of the second computational unit of an impending hardware failure and a corresponding third hardware health status of the third computational unit of no hardware health concerns.

Example 13 provides an exemplary method, including executing, by a plurality of computational units of a computer processing system, tasks for one or more applications; collecting, by a plurality of sensors coupled to the plurality of computational units, measurement data of the plurality of computational units; and storing hardware health statuses corresponding to each of the plurality of computational units determined in a storage, wherein the hardware health statuses are based on the measurement data. The method further includes scheduling the plurality of computational units to perform task execution on the computer processing system for the one or more applications based on the hardware health statuses of the plurality of computational units, wherein a first computational unit of the plurality of computational units is to be excluded from the task execution responsive to its corresponding hardware health status indicating an impending hardware failure.

Example 14 includes the substance of Example 13, wherein error screening content is scheduled to be executed along with the tasks for the one or more applications to further determine the hardware health statuses of the plurality of computational units.

Example 15 includes the substance of Examples 13 to 14, wherein the statuses of the plurality of computational units are updated based on the measurement data periodically obtained from the plurality of sensors.

Example 16 includes the substance of Examples 13 to 15, where the plurality of sensors includes one or more of an Intra-Die Variation (IDV) oscillator, a voltage threshold draft sensor, a reference critical path delay draft sensor, a replication path timing/voltage draft sensor, or a component level Built-In Self Test (BIST) logic.

Example 17 provides an exemplary computer-readable storage medium storing instructions that when executed by a processor of a computing system, are capable of causing the computing system to perform: executing, by a plurality of computational units of a computer processing system, tasks for one or more applications; collecting, by a plurality of sensors coupled to the plurality of computational units, measurement data of the plurality of computational units; and storing hardware health statuses corresponding to each of the plurality of computational units in a storage, wherein the hardware health statuses are based on the measurement data. The method further includes scheduling the plurality of computational units to perform task execution on the computer processing system for the one or more applications based on the hardware health statuses of the plurality of computational units, wherein a first computational unit of the plurality of computational units is excluded from the task execution responsive to its corresponding hardware health status indicating an impending hardware failure.

Example 18 includes the substance of Example 17, wherein error screening content is scheduled to be executed along with the tasks for the one or more applications to further determine the hardware health statuses of the plurality of computational units.

Example 19 includes the substance of Examples 17 to 18, wherein the statuses of the plurality of computational units are to be updated based on the measurement data periodically obtained from the plurality of sensors.

Example 20 includes the substance of Examples 17 to 19, where the plurality of sensors includes one or more of an Intra-Die Variation (IDV) oscillator, a voltage threshold draft sensor, a reference critical path delay draft sensor, a replication path timing/voltage draft sensor, or a component level Built-In Self Test (BIST) logic.

### Additional Explanation

In the foregoing specification, the embodiments of disclosure have been described with reference to specific exemplary embodiments thereof. It will, however, be evident that various modifications and changes may be made thereto without departing from the broader spirit and scope of the disclosure as set forth in the appended claims. The specification and drawings are, accordingly, to be regarded in an illustrative rather than a restrictive sense.

Embodiments of the disclosure may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

As described herein, instructions may refer to specific configurations of hardware such as application specific integrated circuits (ASICs) configured to perform certain operations or having a predetermined functionality or software instructions stored in memory embodied in a non-transitory computer-readable medium. Thus, the techniques shown in the Figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical, or other form of propagated signals - such as carrier waves, infrared signals, digital signals, etc.). In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the disclosure may be implemented using different combinations of software, firmware, and/or hardware. Throughout this detailed description, for the purposes of explanation, numerous specific details were set forth in order to provide a thorough understanding of the present disclosure. It will be apparent, however, to one skilled in the art that the disclosure may be practiced without some of these specific details. In certain instances, well-known structures and functions were not described in elaborate detail in order to avoid obscuring the subject matter of the present disclosure. Accordingly, the scope and spirit of the disclosure should be judged in terms of the claims which follow.

## Claims

1. A computer processing system comprising:
a plurality of computational units to execute tasks for one or more applications;
a plurality of sensors, coupled to the plurality of computational units, to collect measurement data of the plurality of computational units; and
a storage to store hardware health statuses corresponding to each of the plurality of computational units, wherein the hardware health statuses are based on the measurement data;
the plurality of computational units to be scheduled to perform task execution on the computer processing system for the one or more applications based on the hardware health statuses of the plurality of computational units, wherein a first computational unit of the plurality of computational units is to be excluded from the task execution responsive to its corresponding hardware health status indicating an impending hardware failure.

2. The computer processing system of claim 1, wherein error screening content is to be scheduled to be executed along with the tasks for the one or more applications to further determine the hardware health statuses of the plurality of computational units.

3. The computer processing system of claim 1 or 2, wherein the error screening content is to be executed on a computational unit responsive to the computational unit running below capacity during the task execution for the one or more applications.

4. The computer processing system of any of claims 1 to 3, where the plurality of sensors includes one or more of an Intra-Die Variation (IDV) oscillator, a voltage threshold draft sensor, a reference critical path delay draft sensor, a replication path timing/voltage draft sensor, or a component level Built-In Self Test (BIST) logic.

5. The computer processing system of any of claims 1 to 4, wherein the plurality of computational units includes one or more of following entities in the computer processing system: a set of central processing unit (CPU) cores, a set of graphics processing unit (GPU) cores, a set of tensor processing units (TPUs), a set of intelligence processing units (IPU) cores, and a set of memory units.

6. The computer processing system of any of claims 1 to 5, wherein machine learning or heuristic method is to be used to determine the statuses of the plurality of computational units.

7. The computer processing system of any of claims 1 to 6, wherein tasks of a second computational unit of the plurality of computational units are to be moved to a third computational unit of the plurality of computational units responsive to a corresponding second hardware health status of the second computational unit of an impending hardware failure and a corresponding third hardware health status of the third computational unit of no hardware health concerns.

8. A method comprising:
executing, by a plurality of computational units of a computer processing system, tasks for one or more applications;
collecting, by a plurality of sensors coupled to the plurality of computational units, measurement data of the plurality of computational units;
storing hardware health statuses corresponding to each of the plurality of computational units in a storage, wherein the hardware health statuses are based on the measurement data; and
scheduling the plurality of computational units to perform task execution on the computer processing system for the one or more applications based on the hardware health statuses of the plurality of computational units, wherein a first computational unit of the plurality of computational units is to be excluded from the task execution responsive to its corresponding hardware health status indicating an impending hardware failure.

9. The method of claim 8, wherein error screening content is scheduled to be executed along with the tasks for the one or more applications to further determine the hardware health statuses of the plurality of computational units.

10. The method of claim 8 or 9, wherein the statuses of the plurality of computational units are updated based on the measurement data periodically obtained from the plurality of sensors.

11. The method of any of claims 8 to 10, where the plurality of sensors includes one or more of an Intra-Die Variation (IDV) oscillator, a voltage threshold draft sensor, a reference critical path delay draft sensor, a replication path timing/voltage draft sensor, or a component level Built-In Self Test (BIST) logic.

12. The method of any of claims 8 to 11, wherein the plurality of computational units includes one or more of following entities in the computer processing system: a set of central processing unit (CPU) cores, a set of graphics processing unit (GPU) cores, a set of tensor processing units (TPUs), a set of intelligence processing units (IPU) cores, and a set of memory units.

13. The method of any of claims 8 to 12, wherein the plurality of computational units includes one or more of following entities in the computer processing system: a set of central processing unit (CPU) cores, a set of graphics processing unit (GPU) cores, a set of tensor processing units (TPUs), a set of intelligence processing units (IPU) cores, and a set of memory units.

14. The method of any of claims 8 to 13, wherein machine learning or heuristic method is to be used to determine the statuses of the plurality of computational units.

15. A non-transitory computer-readable storage medium storing instructions that when executed by a processor of a computing system, are capable of causing the computing system to perform any of methods 8 to 14.
